# EUROPEAN PATENT APPLICATION

(11) **EP 4 740 821 A1**
(43) Date of publication of application: **13.05.2026**
(21) Application number: 25213917.5
(22) Date of filing: 06.11.2025
(51) Int. Cl.: A47L 11/292, A47L 11/40

(54) **STATION FOR ROBOT CLEANER**

(30) Priority: 12.11.2024 KR 20240160009
(71) Applicant: LG Electronics Inc., Yeongdeungpo-gu Seoul 07336 (KR)
(72) Inventor: HAN, Seungwoo, 08592 Seoul (KR); RYU, Jungwan, 08592 Seoul (KR); LEE, Dongjae, 08592 Seoul (KR)
(74) Representative: Vossius & Partner Patentanwälte Rechtsanwälte mbB

(57) **Abstract**

There is disclosed a robot cleaner station including a housing; a washing tank disposed within the housing, the washing tank in which water used to wash a mop of a robot cleaner is collected; a wastewater tank configured to store water used to wash the mop; a wastewater suction path configured to move water within the washing tank to the wastewater tank; a wastewater discharge path configured to discharge water within the wastewater tank to a drain pipe of a kitchen cabinet; and a wastewater discharge pump configured to discharge water within the wastewater tank, and the wastewater discharge pump may apply air pressure to the wastewater tank.

## Description

### BACKGROUND

### [Technical Field]

Embodiments of the present disclosure relate to a station for a robot cleaner, more particularly, a built-in robot cleaner station that may collect dust from a robot cleaner's dustbin, wash a robot cleaner's mop, and dry the mop, when coupled to the robot cleaner.

### [Background of the Disclosure]

With recent advancement of industrial technology, robot cleaners (or robot cleaners) are being developed that can move around and clean areas required to be cleaned without user intervention.

Such a robot cleaner includes a sensor configured to recognize the space to be cleaned, an agitator configured to sweep and clean the floor, and a mop configured to wipe the floor, and may move while sucking up dust on the floor in the space recognized by the sensor and wiping it with the mop, etc.

Robot cleaners are classified into dry robot cleaners that can suck up and remove foreign substances scattered on the floor, and wet robot cleaner that can wipe out the floor with a moist mop to effectively remove foreign substances attached to the floor. Such a dry robot cleaner is provided with a dust bin and configured to suck up foreign substances on the floor by using the suction power of a suction motor. Such a wet robot cleaner is provided with a water tank and the water contained in the water tank is supplied to a mop so that the mop can wipe out the floor while containing moisture, effectively removing foreign substances attached to the floor.

Charging stands of robot cleaner stations are devices where a robot cleaner having finished cleaning is docked and power is supplied to a battery installed in the robot cleaner to charge the battery. The charging stand may include a power supply module inside. The charging stand includes a charging terminal connected to the power supply module, and the robot cleaner includes a corresponding terminal. When the charging terminal and the corresponding terminal make contact, power is supplied to the battery and it is charged.

Meanwhile, if the robot cleaner station is placed inside a building, it will occupy a certain area of the indoor space. In this case, the indoor space efficiency might be deteriorated. In addition, there is a risk that a user or pet might collide with the robot cleaner while passing by, resulting in injury to the user or pet as well as damage to the robot cleaner.

In the case of a station with an added dust collection function for a robot cleaner, there is a limit to how much damage it can do to the interior of a room due to the increased volume it occupies.

Meanwhile, Chinese utility model registration CN 218922468 U discloses a cleaner station in which a robot cleaner is connected with the lower part of a washing machine to charge the robot cleaner, collect dust, and wash the mop of the robot cleaner.

However, the above-mentioned cleaner station has an open space formed at the bottom of the washing machine into which a robot cleaner can enter, a detergent and water supply mechanism for washing a mop is provided at a vertical upper side of the space into which the robot cleaner enters. A dust bag is placed on the side of the space into which the robot cleaner enters.

In this arrangement, the overall height of the cleaner station is high so that there is a limitation in that it cannot be installed using the space underneath the furniture, including the sink.

In addition, since the above-mentioned cleaner station must be installed at the bottom of the washing machine, a space for installing the washing machine must be provided. There is a limit in that an installation space with a height exceeding the heigh of the cleaner station must be provided, considering not only the height of the cleaner station but also the height of the washing machine itself.

In addition, since the space for coupling the dust bag is located close to the ground, the user must kneel or crouch in front of the station to attach the dust bag, which is inconvenient. Furthermore, the space for attaching the dust bag is narrow, requiring the user to reach into the station with their hands, which is inconvenient.

In addition, during the mop washing process of the robot cleaner, foreign substances attached to the mop may be included in the wastewater. In this case, some foreign substances not filtered by the filter may be sucked into the wastewater tank or may pass through the centrifugal pump when the wastewater is discharged from the wastewater tank. Over time, these foreign substances may accumulate inside the pump, potentially causing blockages.

In addition, Chinese Utility Model Registration No. CN 218279511 U discloses a method for moving fluid by creating negative or positive pressure using a pump. The station is configured to control the inflow and discharge of wastewater using an air pump and a directional valve.

However, the use of a switching valve poses the risk of leakage and pressure loss during the switching process, and a single pump handling both inlet and outlet can easily wear out. Furthermore, the single-path design limits space utilization and layout flexibility.

### DETAILED DESCRIPTION OF THE INVENTION

### [Technical Problems]

Accordingly, one object of the present disclosure is to solve the above-noted disadvantages of the prior art, and to provide a robot cleaner station that may be built into the bottom of a kitchen cabinet without requiring a separate installation space.

Another object of the present disclosure is to provide a robot cleaner station that may accommodate a robot cleaner in the lower space of a kitchen cabinet with a certain height restriction.

A further object of the present disclosure is to provide a robot cleaner station that may automatically collect dust inside a robot cleaner's dust bin, when combined with a robot cleaner, when coupled to the robot cleaner.

A still further object of the present disclosure is to provide a cleaner station that may discharge wastewater from a wastewater tank without worrying about foreign substances getting stuck in the pump when discharging wastewater.

### [Technical Solutions]

To solve the objects of the present disclosure, a robot cleaner station may include a housing; a washing tank disposed within the housing, the washing tank in which water used to wash a mop of a robot cleaner is collected; a wastewater tank configured to store water used to wash the mop; a wastewater suction path configured to move water within the washing tank to the wastewater tank; a wastewater discharge path configured to discharge water within the wastewater tank to a drain pipe of a kitchen cabinet; and a wastewater discharge pump configured to discharge water within the wastewater tank, and the wastewater discharge pump may apply air pressure to the wastewater tank.

The robot cleaner station may further include a wastewater suction pump configured to create negative pressure in the wastewater tank.

The wastewater tank may include a wastewater inlet through which the water of the washing tank flows in; and a check valve configured to open and close the wastewater inlet, and the check valve may be opened only when the wastewater suction pump is in operation.

The wastewater tank may include a wastewater outlet in communication with the wastewater discharge path, and the wastewater outlet may be located lower than the wastewater inlet.

The wastewater inlet and the wastewater outlet may be arranged on the rear side of the wastewater tank, and the wastewater tank may have a wider width in the left-right direction at the rear than at the front.

The wastewater suction pump may be disposed in the same direction as the wastewater inlet is formed in the wastewater tank.

The wastewater discharge pump may be disposed in the opposite direction from the direction where the wastewater outlet is formed in the wastewater tank.

The robot cleaner station may further include a water level detection sensor configured to measure the water level of the wastewater tank.

The wastewater discharge pump may operate based on the water level detected by the water level detection sensor.

The water level detection sensor may include a first sensor; and a second sensor disposed higher from the ground than the first sensor.

The first sensor may be disposed higher than the lowest point of the wastewater outlet based on the ground.

The second sensor may be disposed equal to or lower than the lowest point of the wastewater inlet with respect to the ground.

### [Advantageous Effects]

As described above, the robot cleaner station according to the present disclosure, with the modules for charging the robot cleaner, collecting dust, and washing the mop, is arranged horizontally with the robot cleaner, effectively utilizing the space underneath the kitchen cabinet.

Furthermore, the charging terminal, dust collection unit, mop washing unit, and mop drying unit are arranged in a manner surrounding the robot cleaner, thereby enabling the robot cleaner to perform various functions simultaneously.

Still further, since all surfaces except the front surface are covered by the kitchen cabinet, it provides an aesthetically pleasing interior design to the user.

Still further, by allowing the dust bag to be connected vertically, the volume occupied by the removable structure may be reduced, and the dust bag capacity may be increased.

Still further, by performing the suction and discharge of wastewater through two air pumps, it prevents foreign matter from clogging the pumps during the wastewater discharge process.

### [Description of Drawings]

FIG. 1 is a view to describe a cleaner system according to embodiments that is installed in a lower portion of a kitchen furniture;
FIG. 2 is a view to describe the relationship in which a pipe of the cleaner system according to embodiments of the present disclosure is connected to a drain pipe;
FIG. 3 is a perspective view to describe a cleaner system according to embodiments of the present disclosure;
FIG. 4 is a plane view of FIG. 3;
FIG. 5 is a perspective view to describe a robot cleaner according to embodiments of the present disclosure;
FIG. 6 is a side view of FIG. 6;
FIG. 7 is a bottom view of FIG. 6;
FIG. 8 is a rear view of FIG. 6;
FIG. 9 is a perspective view to describe a robot cleaner station according to embodiments of the present disclosure;

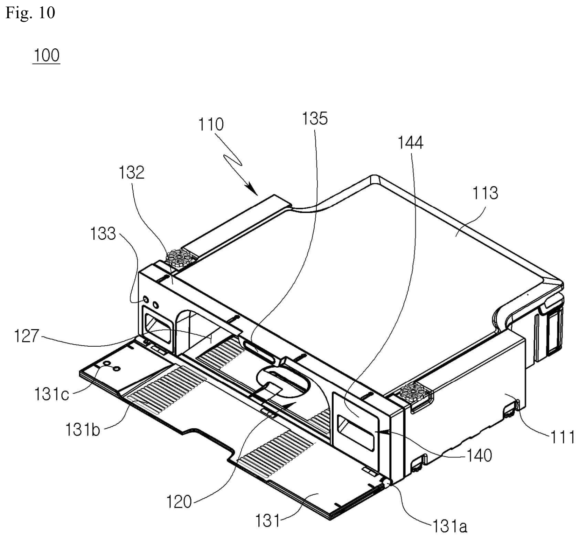

FIG. 10 is a perspective view to describe a door unit of a robot cleaner station according to embodiments of the present disclosure;
FIG. 11 is a plan view of FIG. 10;
FIG. 12 is a perspective view showing an internal structure of a robot cleaner station according to an embodiment of the present disclosure;
FIG. 13 is a plan view of FIG. 12;
FIGS. 14 and 15 are views to describe a washing plate and a washing tank of a robot cleaner station according to an embodiment of the present disclosure;
FIG. 16 is a view to describe a dust collection of a robot cleaner station according to an embodiment of the present disclosure;
FIG. 17 is a view to describe a dust bag drawer of a robot cleaner station according to an embodiment of the present disclosure;
FIG. 18 is a front view to describe a rear surface of a dust collection unit housing of a robot cleaner station according to an embodiment of the present disclosure;
FIG. 19 is a perspective view to describe a dust bag of a robot cleaner station according to an embodiment of the present disclosure;
FIG. 20 is a rear view of FIG. 19;
FIG. 21 is a perspective view of a dust bag of a robot cleaner station according to an embodiment of the present invention, with the bag portion removed;
FIG. 22 is a view showing a dust collection motor and a dust collection motor housing of a robot cleaner station according to an embodiment of the present invention;
FIG. 23 is an enlarged view showing a dust collection path and a reflux path in a robot cleaner station according to an embodiment of the present invention;
FIG. 24 is a cross-sectional view cut along line A-A of FIG. 13 to describe a dust collection unit path;
FIG. 25 is a cross-sectional view cut along line B-B of FIG. 13 to describe a dust collection unit path;
FIG. 26 is an enlarged view showing a mop washing unit of a robot cleaner station according to an embodiment of the present invention;
FIG. 27 is an enlarged view showing a wash water supply unit in a mop washing unit of a robot cleaner station according to an embodiment of the present disclosure.
FIG. 28 is a cross-sectional view showing a wash water nozzle in a mop washing unit of a robot cleaner station according to an embodiment of the present invention;
FIGS. 29 and 30 are views illustrating a detergent container of a robot cleaner station according to an embodiment of the present disclosure;
FIG. 31 is a plan view showing a wastewater tank of a robot cleaner station according to an embodiment of the present disclosure;
FIG. 32 is a view showing a wastewater tank and a washing tank of a robot cleaner station according to an embodiment of the present disclosure;
FIG. 33 is a front view showing the rear side of a waste water container of a robot cleaner according to an embodiment of the present disclosure;
FIGS. 34 and 35 are views showing an external air supply module of a robot cleaner station according to an embodiment of the present disclosure;
FIG. 36 is a plan view showing an air discharge unit of a robot cleaner station according to an embodiment of the present disclosure.
FIG. 37 is a cross-sectional view showing an air flow path for mop drying in a robot cleaner station according to an embodiment of the present disclosure;
FIG. 38 is a view showing an air discharge unit in a robot cleaner station according to an embodiment of the present disclosure;
FIG. 39 is a view showing a state in which a drawer is provided in a robot cleaner station according to an embodiment of the present disclosure; and
FIG. 40 is a block view showing a control configuration in a robot cleaner station according to an embodiment of the present disclosure,

### DESCRIPTION OF SPECIFIC EMBODIMENTS

Description will now be given in detail according to exemplary embodiments disclosed herein, with reference to the accompanying drawings.

The present disclosure may be variously modified and may have various embodiments, and particular embodiments illustrated in the drawings will be specifically described below. The description of the embodiments is not intended to limit the present disclosure to the particular embodiments, but it should be interpreted that the present disclosure is to cover all modifications, equivalents and alternatives falling within the spirit and technical scope of the present disclosure.

Terms of respective elements used in the following description are terms defined taking into consideration of the functions obtained in the present invention. Therefore, these terms do not limit technical elements in the present invention. Further, the defined terms of the respective elements will be called other terms in the art. It will be understood that although the terms first, second, etc. may be used herein to describe various elements, these elements should not be limited by these terms. These terms are generally only used to distinguish one element from another.

The term "and/or" may include any combination of multiple related listed items or any one of multiple related listed items.

It will be understood that when an element is referred to as being "connected with", "on" or "coupled to" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context. In understanding the components, it should be understood as including the error range even if there is no separate explicit description.

Throughout the disclosure, each component can be provided as a single one or a plurality of ones, unless explicitly stated to the contrary. Terms such as "comprise", "include" or "has" are used herein and should be understood that they are intended to indicate an existence of several components, functions or steps, disclosed in the specification, and it is also understood that greater or fewer components, functions, or steps may likewise be utilized.

Terminology that is used in the present disclosure is limited to only for embodiments herewith but made only to make it easy to understand the present disclosure. Terms of respective elements used in the following description are terms defined taking into consideration of the functions obtained in the present invention. Therefore, these terms do not limit technical elements in the present invention. Further, the defined terms of the respective elements will be called other terms in the art.

Hereinafter, referring to the accompanying drawings, embodiments of the present disclosure will be described in detail, to be understood by those skilled in the art to which the present disclosure pertains. The shape and size of elements in the drawings may be exaggerated for clearer explanation.

Kitchen cabinet and Cleaner system:

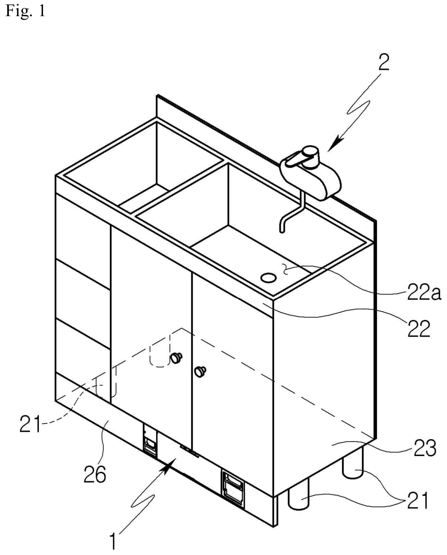

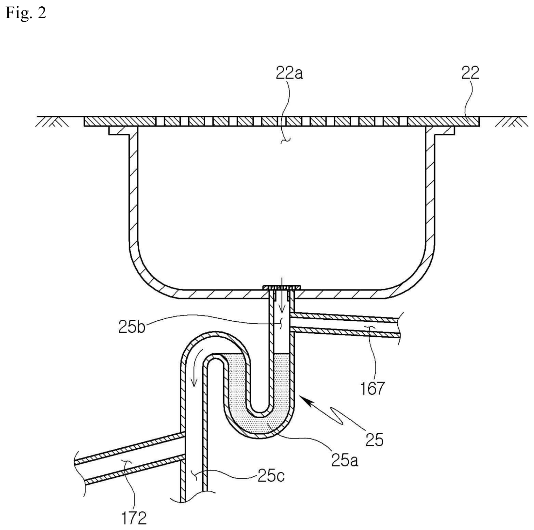

FIG. 1 is a view to describe a cleaner system according to embodiments that is installed in a lower portion of a kitchen cabinet. FIG. 2 is a view to describe the relationship in which a pipe of the cleaner system according to embodiments of the present disclosure is connected to a drain pipe.

The cleaner system 1 according to embodiments of the present disclosure may be provided in a lower portion of a kitchen cabinet 2. Specifically, the kitchen cabinet 2 is placed in the kitchen and may store dishes, plates, cups, etc., and may provide a space for cooking food or washing dishes.

In addition, the kitchen cabinet 2 may be provided with a worktop that may serve as a sink, cooling surface, or work surface.

For example, the kitchen cabinet 2 may include a sink that provides a space for washing dishes on a top surface. Or, the kitchen cabinet may have a kitchen countertop on which cooking tasks are performed. In addition, the kitchen cabinet 2 may include a gas range surface with a gas range, induction range, highlighter or oven installed on the top surface.

Generally, the kitchen cabinet 2 may be made of a standard cabinet with a width of 600 mm in the front-back direction and a width of 600 mm in the left-right direction.

A cleaner system 1 according to another embodiment may be provided in a lower portion of a structure including at least one of water supply pipe or a drain pipe. Specifically, the water supply pipe may mean a path connected with an external water supply source for supplying fluids to the structure, and the pipe may mean a path for draining the fluid discharged from the structure into a sewer.

A storage cabinet for storing dishes and kitchen tools, etc. may be provided in a lower portion of the above-mentioned kitchen cabinet 2 or structure. That is, the kitchen cabinet 2 or the structure may include an upper plate 22 that provides a space for cooking, dishwashing or other tasks, a lower plate 23 spaced apart at a predetermined height from the floor, and a storage space formed between the upper plate 22 and the lower plate 23 to store dishes and kitchen tool. In this case, if the kitchen cabinet 2 is a kitchen sink, a sink 22a may be provided on the upper plate 22.

The lower plate 23 may be supported by a pedestal 21. The pedestal 21 may arranged along a direction perpendicular to the floor of the kitchen and may support the load of the kitchen cabinet 2. At this time, a space may be formed between the floor of the kitchen and the lower plate 23 based on the height of the pedestal 21.

Alternatively, it is also possible to fix the kitchen cabinet 2 to the wall of the building without the pedestal 21. Even in this case, a space may be formed between the kitchen floor and the lower plate 23.

The cleaner system 1 according to the embodiments may be mounted in the space formed between the floor of the kitchen and the lower plate 23 as mentioned above (hereinafter, referred to as "the mounting space").

For example, the mounting space may have a height of 200mm or less and generally a height of 160mm or less.

According to the present disclosure, since the cleaner system 1 is disposed in the lower space of the kitchen cabinet 2, there is an effect of minimizing the exposure of the cleaner 1 to the outside.

In addition, compared to placing a charging stand for a robot cleaner in a certain space in a living room, a room, or a kitchen, the cleaner system 1 is placed in an unused space created by the kitchen cabinet 2 without taking up a separate space, accordingly, there is an effect of maximizing space efficiency.

Meanwhile, a drain pipe 25 for draining the liquid used in cooking or water used in dishwashing may be provided in the kitchen cabinet 2 or the structure. At least predetermined portion of the drain pipe 25 may be disposed in the storage space formed between the upper plate 22 and the lower plate 23. Generally, the drain pipe 25 may be connected a drain hole formed in the sink 22a. The drain pipe 25 may include a U-trap 25a to prevent the backflow of contaminated gas or foul odor. The U-trap 25a may be placed in the storage space. Liquid introduced through the drain hole may flow down due to gravity in upstream 25b of the U-trap, accumulates in the U-trap 25a, and when the water level rises above a predetermined level set by the U-trap 25a, it flows down along the downstream 25c of the U-trap and may be discharged through the sewer.

The cleaner system 1 according to embodiments of the present disclosure may wash and dry the mop 242 of the robot cleaner 200 by using the above-mentioned drain pipe 25.

Although not shown, a water supply pipe may be provided in the kitchen cabinet 2. Constant water (or purified water) may be supplied to the cleaner system 1 through the water supply pipe.

Hereinafter, the specific structure of the cleaner system 1 will be described.

### Cleaner system:

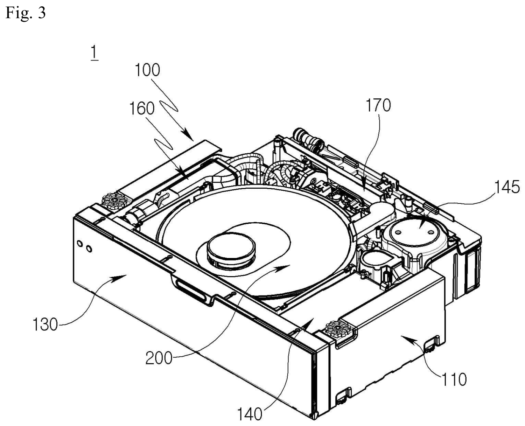

Meanwhile, FIGS. 3 through 5 are views to describe the cleaner system according to embodiments of the present disclosure.

The cleaner system 1 according to embodiments of the present disclosure may include a robot cleaner station 100 and a robot cleaner 200.

The cleaner system 1 may include the cleaner station 100. The robot cleaner 200 may be mounted to the robot cleaner station 100. Specifically, the robot cleaner 200 may enter into a front side of the robot cleaner station 100, and may be accommodated within the robot cleaner station 100. The robot cleaner station 100 may remove dust of a dust bin 220 of the robot cleaner 200. The robot cleaner station 100 may wash the rotary cleaning unit 240 of the robot cleaner 200. The robot cleaner station 200 may dry a rotary cleaning unit 240 of the robot cleaner 200. The robot cleaner station 200 may supply power to the robot cleaner.

### Robot cleaner:

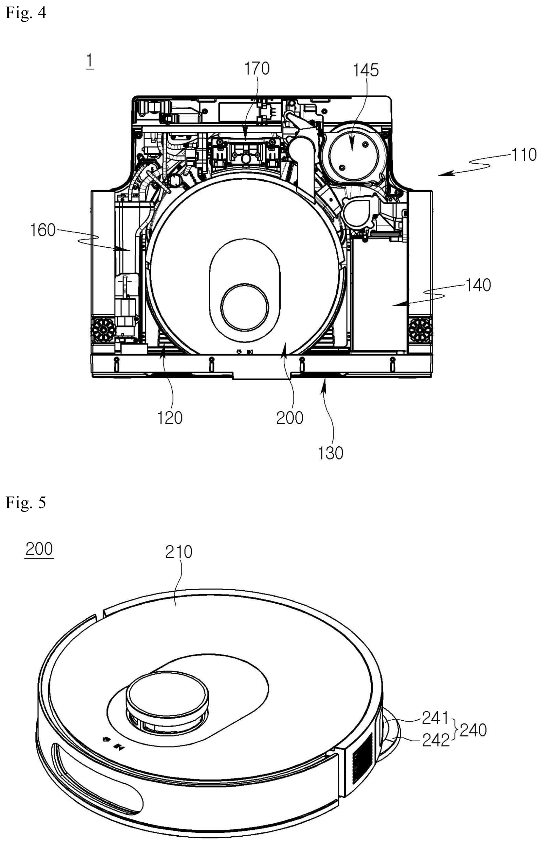

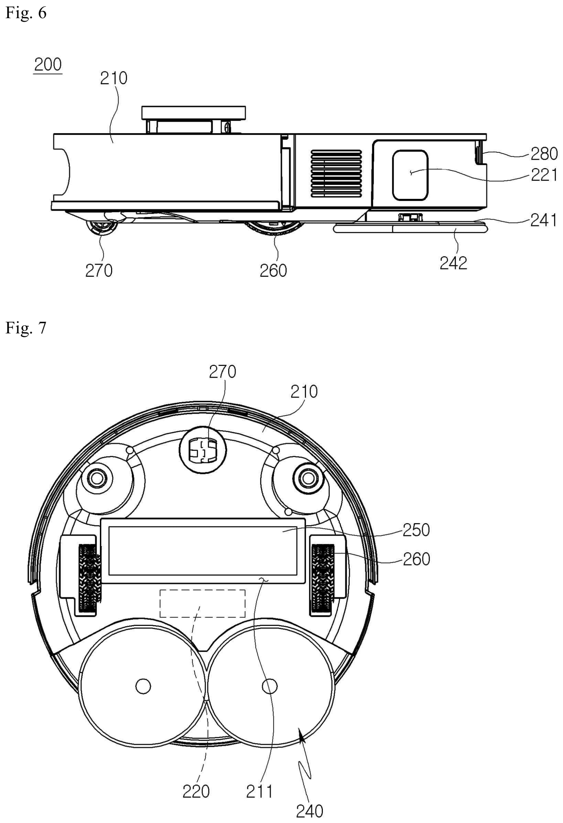

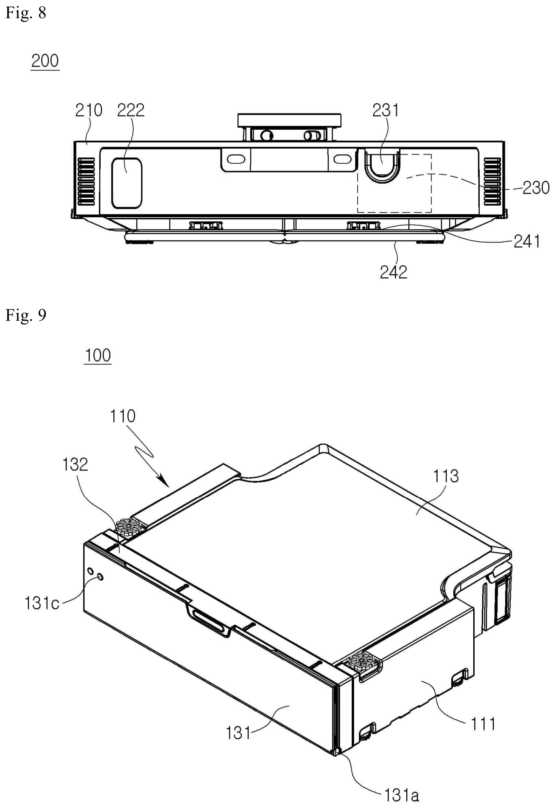

Meanwhile, FIGS. 5 to 8 are views to describe the robot cleaner in the cleaner system according to embodiments of the present disclosure.

Referring to FIGS. 5 to 8, the structure of the robot cleaner 200 will be described as follows.

The robot cleaner 200 may automatically clean an area to be cleaned by moving around the area to be cleaned and sucking up foreign substances such as dust from the floor.

The robot cleaner 200 according to embodiments may be configured to clean the floor while placed on the floor and moving along the floor. Accordingly, the following description will be made by determining the up-down direction based on the state where the robot cleaner 200 is placed on the floor.

Based on a pair of wheels 260, the side where an auxiliary wheel 270 to be described later is placed may be set as the front, and the side where a rotary cleaning unit 240 to be described later is placed may be set as the rear.

The "lowermost portion" of each element described in embodiments of the present disclosure may be the portion positioned lowest in each element when the robot cleaner 200 according to embodiments of the present disclosure is used while placed on the floor, or may be the portion closest to the floor.

The robot cleaner 200 according to embodiments of the present disclosure may include a body 210, a dust bin 220, a water tank 230, a rotary cleaning unit 240, an agitator 250, a wheel 260, an auxiliary wheel 270, and a charging terminal 280.

The body 210 may defined the overall exterior of the robot cleaner 200. Each component of the robot cleaner 200 may be coupled to the body 210, and some components of the robot cleaner 200 may be accommodated inside the body 210.

Specifically, components of the robot cleaner 200 may be provided in a space formed inside the body 210. As one example, the space inside the body 210 may accommodate a battery and at least one motor.

In embodiments of the present disclosure, the body 210 may be formed in a shape in which the width (or diameter) in the horizontal direction is greater than the height in the vertical direction. This body 210 may help the robot cleaner 200 to have a stable structure, and provide a structure that is advantageous in avoiding obstacles when the robot cleaner 200 moves (or drives).

When viewed from above or below, the body 210 may be formed in various shapes such as circular, oval, or square.

The body 210 may be divided into an upper body and a lower body. The lower body and the upper body are coupled to each other to define an inner space.

The lower body may be coupled to the upper body to form the space in which a battery, at least one sensor, and at least one motor may be accommodated.

The lower body may be formed with a suction port 211 configured to introduce air and a hole for accommodating a pair of wheels 260.

The suction port 211 may be a path through which dust introduces dust of the floor, and the suction port 211 may be in communication with a suction path (not shown) formed inside the body 210. The suction path may be in communication with an inner space of the dust bin 220.

Meanwhile, an air discharge path may be further provided in the lower body. The air discharge path has one side connected to the inner space of the dust bin 220 and the other side connected with an outlet hole. At this time, a filter may be disposed at the outlet hole.

With this configuration, the air introduced through the suction port 211 may flow into the dust bin 220 through the suction path, and may be discharged to the air discharge hole through the air discharge path.

The agitator 250 to be described later may be rotatably mounted in the suction port 211. With this configuration, dust around the suction port 211 may be guided into the suction port 211 by the rotation of the agitator 250, and the efficiency of sucking dust can be increased.

The upper body may be configured to define the upper exterior of the robot cleaner 200. Although not shown, a display may be provided on the upper body.

The robot cleaner 200 according to the present disclosure may include a bumper. The bumper may be coupled along the edge of the body 210, but may be configured to move relative to the body 210.

The bumper may be coupled along some area of the edge of the body 210, or along the all area of the edge of the body 210. At least one elastic member (not shown) may be provided between the bumper and the body 210. With this configuration, when comes into contact with an obstacle or the like and moves relative to the center of the body 210, the bumper can return to its original position by the restoring force of the elastic member (not shown), and may absorb or disperse the shock applied to the bumper, thereby preventing and reducing the shock from being transmitted to the body 210.

The dust bin 220 may be provided to suck dust and air from the outside and store the dust.

The dust bin 220 may be configured to store dust flowing through the suction path. The dust bin 220 may have a dust inlet hole that is in communication with the suction path, an inner space for storing dust, and an air outlet hole through which air is discharged.

The dust bin 220 may be provided within the body 210. At this time, the dust bin 220 may be secured to the body 210 or it may be detachably coupled to the body 210 according to an embodiment.

Meanwhile, a dust outlet path may be formed in the dust bin 220 according to the present disclosure. The dust outlet path may make the inner space of the dust bin 220 communicate with the external space of the robot cleaner 200. With this configuration, when dust collects by using the robot cleaner station 100, dust stored inside the dust bin 220 may b removed.

Meanwhile, the dust bin 220 according to embodiments may have a dust outlet hole 221 in communication with the dust outlet path. As one example, the dust outlet hole 221 may be formed on a rear side of the outer surface (or outer circumferential surface) of the body 210. As another example, the dust outlet hole 221 may be formed on an outer surface of the dust bin 220.

A dust bin door 222 configured to selectively open and close the dust outlet hole 221 may be provided in the robot cleaner 200 according to embodiments of the present disclosure. Specifically, the dust bin door 22 may be coupled to the body 210 and disposed at a position that may block the dust outlet hole 221. For example, the dust bin door 222 may be made of rubber or resin material and flappably provided so that one side can be fixedly connected to the body 210.

With this configuration, when a dust collection motor 145 provided in the robot cleaner station 100 to be described later is operated, the dust bin door 222 may be elastically deformed by the driving force of the dust collection motor 145, and the dust outlet hole 221 is opened, so that dust inside the dust bin 220 can be collected by the dust collection unit 140 of the robot cleaner station 100.

The water tank 230 may be formed in a shape of a container having an inner space to store a liquid such as water. The water tank 230 may be disposed inside the body 210, and fixedly coupled to the body 210 or detachably coupled to the body 210.

The water tank 230 may include a supply portion 231 and a nozzle (not shown). The supply portion 231 may be configured to supply a liquid such as water to the water tank from the outside. For example, the supply portion 231 may have a water injection hole formed on a rear side of the outer surface (or outer circumferential surface) of the body 210 and may be connected to the storage space formed inside the water tank 230 through a water supply hose.

At this time, the supply potion 231 may be placed on the opposite left and right sides of the robot cleaner 200 in relation to the dust discharge hole 221. For example, when the dust discharge hole 221 is disposed on the rear left side of the body 210, the supply portion 321 may be disposed on the rear right side of the body 210.

With this configuration, in a state where the robot cleaner 200 is coupled to the robot cleaner station 100, the robot station 100 may simultaneously perform dust collection and water injection.

Meanwhile, the nozzle (not shown) may be formed in a tube or pipe shape, and may be connected to the water tank 230 so that the liquid inside the water tank 230 can flow there through. The nozzle (not shown) may have one end connected to the water tank 230 and the other end positioned above a pair of rotary plates 241, so that the liquid inside the water tank 230 can be supplied to the pair of mops 242.

That is, the nozzle (not shown) may have a shape of a single pipe branching into two. At this time, one end of the branched pipe may be positioned above the left rotary plate and the other end thereof may be positioned above the right rotary plate.

Meanwhile, although not shown, a pump may be provided in the water tank 230 and may be configured to flow the water inside the water tank to the nozzle (not shown). Accordingly, when the pump of the water tank 230 is operated, the liquid stored inside the water tank 230 may be discharged to the rotary cleaning unit 240 through the nozzle (not shown).

The rotary cleaning unit 240 may include the rotary plate 241 and the mop 242.

The rotary plate 241 may include a pair of left and right rotary plates, and the mop 242 may include a pair of left and right mops.

The rotary plate 241 may be rotatably provided on a lower surface of the body 210, and the mop 241 may be coupled to a lower surface of the rotary plate 241.

The rotary plate 241 may have a predetermined area, and may be formed in a shape of a flat plate or frame. The above-mentioned rotary plate 241 may be generally laid horizontally, and may be formed in a shape in which the horizontal width (or diameter) is sufficiently larger than the vertical height. The rotary plate 241 coupled to the body 210 may be parallel to the floor surface, or may be inclined with the floor surface, or may be inclined with respect to the floor surface. The rotary plate 241 may be formed in a circular plate shape, the lower surface of the rotary plate 241 may be generally circular and the rotary plate 241 may form an overall rotational symmetry.

The pair of rotary plates 241 may be symmetrical to each other.

The mop 242 may be coupled to the lower surface of the rotary plate to face the floor surface.

The mop 242 may be formed so that the bottom surface facing the floor can have a predetermined area, and the mop 242 may be formed in a flat shape. The mop 242 may be formed in a shape in which the horizontal width (or diameter) is sufficiently larger than the vertical height. When the mop 242 is coupled to the body 210, the lower surface of the mop 242 may be parallel to the floor surface or may be inclined with respect to the floor surface.

The lower surface of the mop 242 may be generally circular, and the mop 242 may be formed in an overall rotationally symmetrical shape. In addition, the mop 242 may be detachably coupled to the lower surface of the rotary plate 241, and coupled to the rotary plate 241 to rotate together with the rotary plate 241.

Although not shown, a driving unit configured to apply a rotational force to the rotary plate 241 may be provided in the rotary cleaning unit 240. For example, the driving unit may include a motor and at least one gear. Accordingly, when the driving unit is operated, the rotary plate 241 and the mop 242 may rotate together to mop and clean the floor surface.

The agitator 250 may include a plurality of rotatable brushes configured to guide dust and air into the dust bin 220 from the outside. At this time, the agitator 250 may include at least one gear.

Meanwhile, the agitator 250 according to this embodiment may be configured to receive rotational power from a separate agitator motor (not shown) and also receive rotation power from the driving motor according to embodiments, or may be configured to receive rotational power from the driving unit of the rotary cleaning unit 240.

The wheel 260 may be provided on the lower surface of the body 210 and connected to the driving unit (not shown). At this time, the driving unit (not shown) may be coupled to the body 210.

The wheel 260 may be provided in the body 210 and configured to roll on the floor surface.

The wheel 260 may be configured of a first driving wheel and a second driving wheel. At this time, the first driving wheel may be the same as the second driving wheel, or they may be formed symmetrically. As one example, when the first driving wheel is arranged on the left side of the robot cleaner 200, the second driving wheel may be arranged on the right side of the robot cleaner 200, and in this case, the first driving wheel and the second driving wheel may be symmetrical to each other.

The driving unit (not shown) may include a driving motor and a gear. Here, the driving motor may be mounted inside the body 210 and configured to provide power to the wheel 260. The driving motor may include a first driving motor and a second driving motor.

The driving motor may be configured of an electric motor. A plurality of gears may be formed engage with each other and rotate, connect the driving motor and the wheel 260 with each other, and transmit the rotational power of the driving motor to the wheel 260. Accordingly, the wheel 260 may rotate when the rotation axis of the driving motor rotates.

With this configuration, when the driving motor is operated, the wheel 260 may rotate and the body 210 may move at a predetermined driving speed on the floor surface.

An auxiliary wheel 270 may be provided on the lower surface of the body 210 and configured to roll on the floor surface (the cleaning target). The auxiliary wheel 270 may support the body 210 on the floor surface together with the pair of wheels 260. With this configuration, the auxiliary wheel 270 may be configured to guide the movement of the robot cleaner 200 while minimizing friction between the robot cleaner 200 and the floor.

The suction motor (not shown) may be configured to generate a suction power for sucking dust and air from the outside through the suction port 211. For example, the suction motor (not shown) may be an electric motor. External dust and air may be introduced into the suction port 211 by the suction force generated from the suction motor (not shown) and may reach the dust bin 220 after pashing through the suction path.

Although not shown, a battery may be coupled to the body 210 and configured to supply power to the other components composing the robot cleaner 200. The battery may be configured to supply power to at least one motor provided in the robot cleaner 200. For example, the battery may provide power to the rotary cleaning unit 240, the agitator 250, the wheel 260, and the motor provided in the suction motor (not shown).

In addition, the battery may be configured to supply power to the sensor unit (not shown) and the control unit (not shown).

The battery may be charged by an external power source, and for this purpose, a charging terminal 280 may be provided on one side of the body 210. For example, the charging terminal 280 may receive power by coming into contact with a power supply terminal 123b of the robot cleaner station 100 when the robot cleaner 200 is mounted to the robot cleaner station 100.

### Robot cleaner station:

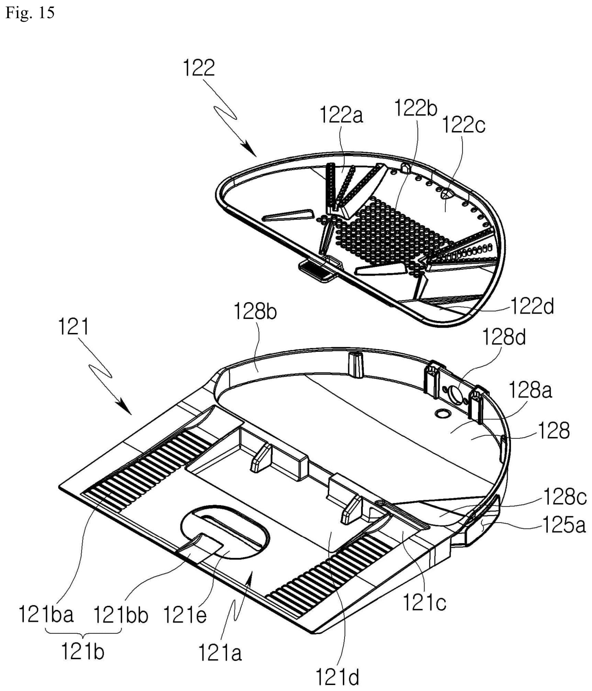

Referring to FIGS. 3 and 15, the robot cleaner station 100 according to the present disclosure will be described as follows.

The robot cleaner 200 may be mounted in the robot cleaner station 100. The robot cleaner 200 may be mounted to a mounting unit 120 of the robot cleaner station 100.

The robot cleaner station 100 may include a housing 110.

The housing 110 may define the exterior of the robot cleaner station 100. For example, the housing 110 may be formed in a shape similar to a hexahedron having at least one outer wall surfaces.

The housing 110 may have a space formed to accommodate the mounting unit 120, a dust collection path 130, a dust collection unit 140, a dust collection motor 145, a mop washing unit 160, a mop drying unit 170, and the air discharge path 125a.

The housing 110 may be mounted in a lower portion of the kitchen cabinet 2. Specifically, the housing 110 may be installed in a mounting space 24 formed between the lower plate 23 of the kitchen cabinet 2 and the floor of the kitchen.

The housing 110 may include a pair of outer wall surfaces 111 facing each other. The outer wall surfaces 111 may mean surfaces formed along the gravity direction.

As one example, the pair of outer wall surfaces 111 may be installed in the lower portion of the kitchen cabinet 2 at a predetermined distance from the floor. Meanwhile, the housing 110 may further include a bottom surface 112 facing the floor of the kitchen, and the pair of outer wall surfaces 111 may be connected to each other through the bottom surface 112. Meanwhile, the housing 110 further includes an upper cover 113 facing the lower plate 23 of the kitchen cabinet 2, and the upper cover 113 may be detachably coupled to the upper ends of a pair of outer walls 111. Therefore, even if foreign substances fall downward from the kitchen cabinet 2, the components of the robot cleaner 200 and the robot cleaner station 100 may be prevented from being contaminated. In addition, the housing 110 may further include a rear surface 115 facing the wall of the building. With this configuration, the components of the robot cleaner station 100 may be accommodated inside the housing 110 (between the pair of outer walls).

In addition, the robot cleaner 200 may be mounted inside the housing 110. The housing 110 may be arranged so that the pair of outer wall surfaces 111 have a gap (or distance) greater than the maximum horizontal width of the robot cleaner 200. With this configuration, the robot cleaner 200 may enter and exit the housing 110.

At this time, the robot cleaner 200 according to this embodiment may enter or exit from the front of the robot cleaner station 100. Here, the front may mean the direction in which the door 126 is provided with respect to the inside of the robot cleaner station 100.

The rear means the opposite direction of the front with respect to the inside of the robot cleaner station 100. For example, the building wall (not shown) may be placed at the rear of the robot cleaner station 100.

When looking forward from the inside of the robot cleaner station 100, the left side may be called the left direction and the right side may be called the right direction.

That is, the outer wall surfaces of the robot cleaner station 100 may be disposed in the left direction and the right direction, respectively.

Accordingly, the top of the housing 110 may be covered by the kitchen cabinet 2, and the bottom of the housing 110 may be covered by the kitchen floor. In addition, the left and right surfaces of the housing 110 may be covered by the outer walls 111, but may be placed in the lower portion of the kitchen cabinet 2. At this time, the lower portion of the kitchen cabinet 1 may be finished by a baseboard except the robot cleaner station 100, thereby exposing only the front surface of the housing 110 to the outside.

Through this, it is possible to minimize the exposure of the robot cleaner station 100 and the robot cleaner 200 to the outside.

With this configuration, the robot cleaner 200 according to the present disclosure has an effect of providing an aesthetic appeal to the user in terms of interior design.

Meanwhile, a space through which a drain hose for discharging waste water generated after the mop 242 is washed passes, and a space a hose for discharging moisture generated during a drying process for the mop 242 passes. For example, the space through which the hoses can pass may be formed on at least one of the outer wall surfaces 111, and the upper surface 112.

### Layout:

The robot cleaner station 100 according to an embodiment of the present disclosure is characterized by being installed in the lower space of a kitchen cabinet 2.

To this end, the robot cleaner station 100 according to an embodiment of the present disclosure is characterized by being arranged horizontally to fit the space formed between the lower plate 23 of the kitchen cabinet 2 and the kitchen floor.

Specifically, the robot cleaner station 100 according to an embodiment of the present disclosure may have the dust collection unit 140 and/or the mop washing unit 160 arranged on the side of the entrance 127.

At this time, if both the dust collection unit 140 and the mop washing unit 160 are provided, the mounting unit 120 may be placed between the dust collection unit 140 and the mop washing unit 160.

For example, the entrance 127 and the door 126 may be placed in front of the robot cleaner station 100. Furthermore, the mounting unit 120 to which the robot cleaner 200 is coupled may be placed rearward from the entrance 127. At this time, the dust collection unit 140 may be placed a predetermined distance from the front end of the robot cleaner station 100 to the rear. Furthermore, the mop washing unit 160 may also be placed a predetermined distance from the front end of the robot cleaner station 100 to the rear.

Therefore, when looking at the robot cleaner station 100 from the front outside of the robot cleaner station 100, the front end of the dust collection unit 140 and/or the front end of the mop washing unit 160 may be arranged on the left and right of the entrance 127.

At this time, the dust bag drawer 144 of the dust collection unit 140 may be provided so as to be withdrawable to the front of the housing 110. In addition, the detergent container 163 of the mop washing unit 160 may be provided so as to be withdrawable to the front of the housing.

Meanwhile, the rear end of the dust collection unit housing 141 and the detergent container 163 may be arranged at a predetermined distance from the rear end of the housing 110. In addition, the dust collection motor 145 may be arranged between the rear end of the dust collection unit housing 141 and the rear end of the housing 110. With this configuration, the connection of a power line supplying power to the dust collection motor 145 may be facilitated. In addition, there is an effect of minimizing the overall space occupied by the mounting unit 120, the dust collection unit housing 141, and the dust collection motor 145 within a limited space.

In addition, at least a flow path for the wash water for washing the mop 242 and a pump providing the flow force of the wash water may be arranged between the rear end of the housing 110 and the rear end of the detergent container 163. With this configuration, the path for wash water to flow from the water supply pipe can be minimized. Furthermore, the overall space occupied by the mounting unit 120, the mop detergent container 163, and the flow path for wash water can be minimized within a limited space.

Meanwhile, the robot cleaner station 100 may have the mop drying unit 170 positioned rearward of the mounting unit 120. At this time, the mop drying unit 170 may be positioned between the rear end of the mounting unit 120 and the rear end of the housing 110.

Therefore, the robot cleaner station 100 according to an embodiment of the present disclosure may have the dust collection unit 140 and the mop washing unit 160 positioned on the left and right sides of the mounting unit 120, and the mop drying unit 170 positioned rearward.

That is, the robot cleaner station 100 according to an embodiment of the present disclosure may have the dust collection unit 140, the mop washing unit 160, and the mop drying unit 170 all positioned within a predetermined distance from the outer edge of the mounting unit 120.

This shortens the distance between the dust bin 220 and the dust collection unit 140 of the robot cleaner 200, thereby minimizing flow loss. Furthermore, by minimizing the distance between the mop 242 and the mop washing unit 160 of the robot cleaner 200, and between the mop 242 and the mop drying unit 170 of the robot cleaner 200, it is possible to limit the range of wash water and washed wastewater.

Furthermore, this arrangement allows the robot cleaner station 100 of the present disclosure to place all components within a limited height.

Consequently, the robot cleaner station 100 according to the embodiment of the present disclosure may have the dust collection unit 140, the mop washing unit 160, and the mop drying unit 170 positioned on three sides surrounding the mounting unit 120 except for the front side where the robot cleaner 200 enters. By this arrangement, even in a situation where the vertical height is limited, it is possible to charge the robot cleaner 200 using a minimum of horizontal space, as well as collect dust from the robot cleaner 200, wash the mop 242, and dry the mop 242.

### Mounting unit:

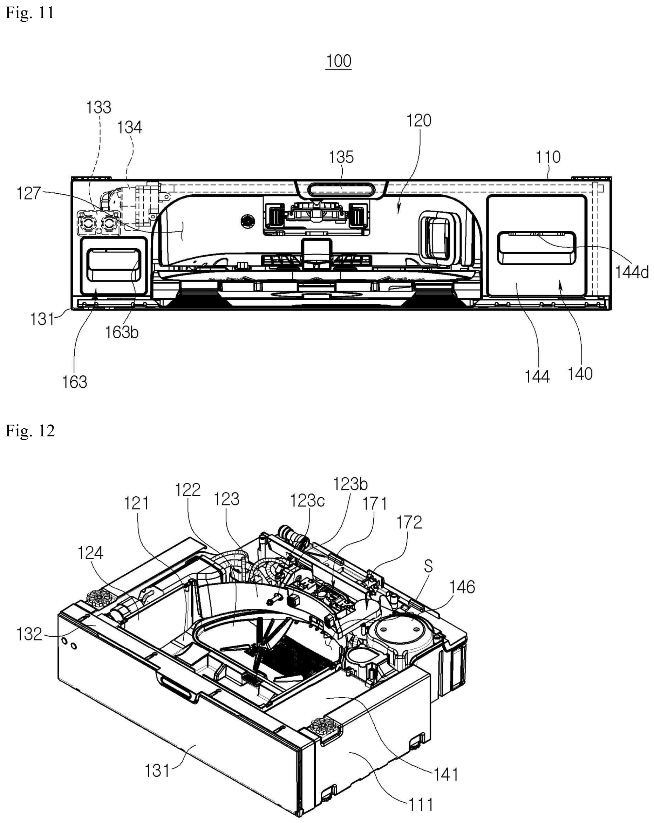

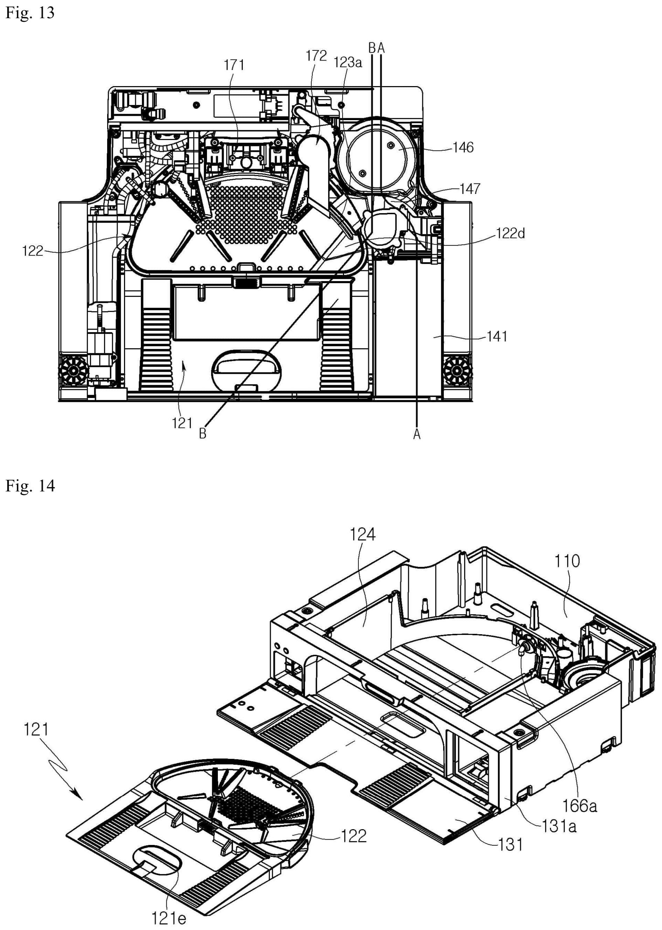

As shown in FIGS.12 to 15, the robot cleaner station 100 may include the mounting unit 120.

The robot cleaner 200 and the robot cleaner station 100 may be physically, electrically and/or wiredly connected with each other through the mounting unit 120.

The mounting unit 120 may be disposed inside the housing 110.

An introduction opening 127 through which the robot cleaner 200 is introduced may be formed in a front side of the mounting unit 120. The entrance 127 may mean a space formed on the front surface of the robot station 100.

The entrance 127 may have a size that is large enough for the robot cleaner 200 to pass through. That is, the heigh of the entrance 127 may be greater than that of the robot cleaner 200. At this time, the entrance 127 may mean a space formed upward along a vertical direction from the front end of the base 121, which will be described later.

At least one of the dust collection unit 140 and the mop washing unit 160 may be disposed on left and right sides of the entrance 127. Accordingly, the left and right ends of the entrance 127 may form a boundary with the dust collection unit 140 and the mop washing unit 160.

At this time, the entrance 127 may be closable by the door 126.

The mounting unit 120 may include an accommodating space S, a base 121, a mounting wall 123, and an inner wall 124.

The accommodating space S of the mounting unit 120 may accommodate the robot cleaner 200. As one example, the accommodating space S may be a space surrounded by the base 121, the mounting wall 123, and the inner wall 124. As another example, the accommodating space S may be a space surrounded by the base 121, a washing plate 122, the mounting wall 122, and the inner wall 124. As a further example, the accommodating space S may be a space where the robot cleaner 200 is located while the robot cleaner 200 is connected to a power supply terminal 123b, or a space where the robot cleaner 200 is located while the dust bin 220 of the robot cleaner 200 is in communication with a dust passage hole 123a.

The base 121 may be configured to supply the robot cleaner 200 when the robot cleaner 200 is mounted to the robot cleaner station 100. The base 121 may be contacted by the wheel 260 of the robot cleaner 200 on the upper surface. In addition, the base 121 may be contacted by the auxiliary wheel 270 of the robot cleaner 200 on the upper surface.

The base 121 may include a base body 121a, an inclined portion 121b, a wheel coupling portion 121c, an agitator accommodating portion 121d, and a washing tank 128.

The base body 121a may defined the overall exterior of the base 121. The inclined portion 121b, the wheel coupling portion 121c, the agitator accommodating portion 121d, and the washing tank 128 may be disposed on the base body 121a.

The horizontal width or diameter of the base body 121a may greater than the vertical height. With this configuration, there is an effect of stably supporting the robot cleaner station 100 on the bottom surface.

A reflux path may be provided inside the base body 121a. accordingly, the air discharged from the dust collection motor 145 may flow through the air circulation path formed in the base body 121a, and may be then discharged to the air reflux hole 125b.

The inclined portion 121b may be disposed at the entrance through which the robot cleaner 200 climbs in the base body 121a.

The inclined portion 121b may have a slope inclined upward to the front in the direction in which the robot cleaner 200 enters. More specifically, the front end of the inclined portion 121b toward the entrance may be connected so that there is no height difference with the ground, but may have a slope increasing as it faces the front in the direction in which the robot cleaner 200 enters. At this time, the direction in which the robot cleaner 200 enters means the rear with respect to the robot cleaner station 100. As a result, the robot cleaner 200 may easily climb up from the ground to the robot cleaner station 100.

A wheel guide portion 121ba may be provided in the inclined portion 121b.

The wheel guide portion 121ba may be provided in a shape of a groove configured to guide the movement of the wheel 260 of the robot cleaner 200. To allow the robot cleaner 200 to stably drive, the surface of the wheel guide portion 121ba may be formed to correspond to the surface of the wheel 260. In addition, the wheel guide portion 121ba may have the groove with the width greater than the width of the wheel 260, and the width of the groove may be formed to become narrower with respect to the entrance as moving toward along the climbing path of the robot cleaner 200. Accordingly, the wheel of the robot cleaner 200 may easily enter the robot cleaner station 100, but the wheel may be guided to the proper position because the left and right movement of the wheel 260 is limited by the grove having the width gradually becoming narrower.

An auxiliary wheel guide portion 121bb may be provided on the inclined portion 121b.

The auxiliary wheel guide portion 121bb may be formed in a shape of a groove guiding the movement of the auxiliary wheel 270 of the robot cleaner 200. In addition, the auxiliary wheel guide portion 121bb may be formed in a shape of a protrusion to come into contact with the auxiliary wheel 270 when the wheel 260 of the robot cleaner 200 is seated on the wheel guide portion 121ba. Accordingly, when driving on the inclined portion 121b, the robot cleaner 200 may be stably supported by the auxiliary wheel 270 as well as the wheel 260.

The wheel 260 of the robot cleaner 200 moving upward along the wheel guide portion 121ba may be seated on the wheel seating portion 121c. When the wheel 260 of the robot cleaner 200 is seated on the wheel coupling portion 121c, the physical connection between the robot cleaner 200 and the robot cleaner station 100 may be made. The surface of the wheel coupling portion 121c may be formed to correspond to the surface of the wheel 260 so that the robot cleaner 200 can be supported stably. The wheel coupling portion 121c may extend from the upper end of the wheel guide portion 121ba. The wheel coupling portion 121c may be connected with the wheel guide portion121ba without steps. Accordingly, the robot cleaner 200 may easily move pass the inclined portion 121b to the wheel coupling portion 121c.

The wheel coupling portion 121c may be disposed at a stop position of the left and right wheels 260 of the robot cleaner 200 can stops at the proper position. Here, the stop position of the wheel 260 means a position at which the robot cleaner 200 is set to stop so as to be connected to the power supply terminal 123b and/or a position at which the dust bin 220 of the robot cleaner 200 is set to stop so as to be connected to the dust passage hole 123a.

The shape of the wheel coupling portion 121c may correspond to the shape of the wheel 260 of the robot cleaner 200, that is, an arch shape. With this configuration, the robot cleaner 200 may move along the wheel guide portion 121ba and stop at the same time as the wheel 260 is inserted into the wheel coupling portion 121c, and the wheel 260 can be stably seated on the arch-shaped wheel coupling portion 121c.

The agitator accommodating portion 121d may accommodate at least predetermined portion of the agitator 250 of the robot cleaner 200.

The agitator accommodating portion 121d may be formed between the wheel coupling portions 121c. The agitator accommodating portion 121d may be formed in a shape corresponding to the agitator 250 of the robot cleaner 200. The agitator accommodating portion 121d may be formed in a rectangular parallelepiped shape with an open upper portion. The lower surface of the agitator accommodating portion 121d may be sealed by the bottom surface of the base body 121a or the bottom surface of the housing 110. Accordingly, the agitator 250 of the robot cleaner 200 that has moved upward along the inclined portion 121b may be settled into the recessed portion 121da through the open upper surface of the agitator accommodating portion 121d. At this time, the depth of the recessed portion 121da may be formed shallower than the depth of the wheel coupling portion 121c.

The recessed portion 121da may be recessed from the bottom member 121. Through this, at least some area of the agitator 250 may be accommodated in the accommodating space of the recessed portion 121da.

An air reflux hole 125b may be formed in the agitator accommodating portion 121d. The air reflux hole 125b may be formed on the side of the agitator accommodating portion 121d. The air reflux hole 125b may connect the recessed portion 121da and the dust collection motor 145 through a circulation path. The recessed portion 121da and the circulation path may be communicated through the air reflux hole 125b. Therefore, the air discharged from the dust collection motor 145 may pass through the air reflux hole 125b and be discharged to the recessed portion 121da of the agitator accommodating portion 121d.

The agitator accommodating portion 121d may guide air discharged through the air reflux hole 125b to the suction port 211 of the robot cleaner 200.

Meanwhile, the base 121 may be provided so as to be withdrawable from the housing 110 and the drawer 190. At this time, the base 121 may be withdrawn through the entrance 127 along the space between the inner wall 124.

To facilitate this, a base handle 121e may be formed on the base 121. The base handle 121e may be formed between the agitator accommodating portion 121d and the auxiliary wheel guide portion 121bb. Additionally, the base handle 121e may be formed between a pair of wheel guide portions 121ba.

The base handle 121e may be formed in a recessed shape within the base body 121a, and may be formed in a recessed shape from the rear to the front downward. For example, the base handle 121e may be formed in an oval-shaped groove shape, with a cover formed at the front and an open shape at the rear.

With this configuration, a user can easily pull out the base 121 by grasping and pulling the handle 121e.

The coupling wall 123 is configured to place the dust passage hole 123a, power supply terminal 123b, and water supply nozzle 123c of the robot cleaner station 100. The coupling wall 123 may spatially separate the accommodating space S from the components of the robot cleaner station 100. The coupling wall 123 may extend vertically from the rear side of the base 121. The coupling wall 123 may be formed to correspond to the shape of the robot cleaner 200. For example, when the cleaner body 210 of the robot cleaner 200 has a cylindrical shape, the coupling wall 123 may be formed in an arc shape with a predetermined radius. With this configuration, the outer surface of the robot cleaner 200 may be surrounded, and the area facing the outer surface of the robot cleaner 200 may be increased. Additionally, it can stably support the robot cleaner 200.

A dust passage hole 123a may be formed in the mounting unit 120 to allow air from outside the housing 110 to flow into the inside. Specifically, the dust passage hole 123a may be formed in the coupling wall 123 to allow air from outside the housing 110 to flow into the inside. At this time, the dust passage hole 123a may be placed at the rear of the dust collection unit housing 141 to be described later.

The dust passage hole 123a may be communicated with the dust bin 220 of the robot cleaner 200. The dust passage hole 123a may be communicated with a dust discharge hole 221 of the dust bin 220 of the robot cleaner 200. The dust passage hole 123a may be formed in a hole shape corresponding to the shape of the dust bin 220 to allow dust from the dust bin 220 to flow into the dust collection unit 140.

The dust passage hole 123a may be formed to communicate with the dust collection path 147 and 148. The air sucked into the dust passage hole 123a may flow through the dust collection path 147, 148 and then be exhausted through the air reflux portion 125.

The robot cleaner station 100 may include a power supply module that supplies power to the robot cleaner 200. The power supply module may include a power supply module housing and a power supply terminal 123b, and a circuit board and components for power supply may be mounted within the power supply module housing. Furthermore, the power supply terminal 123b may be positioned forward of the power supply module housing, exposed on the coupling wall 123.

The power supply terminal 123b may supply power to the robot cleaner 200 coupled to the mounting unit 120. The power supply terminal 123b may be electrically connected by contact with the charging terminal of the robot cleaner 200. The power supply terminal 123b may be positioned on the mounting unit 120. Specifically, the power supply terminal 123b may be positioned on the coupling wall 123. The power supply terminal 123b may be electrically connected to the robot cleaner 200 coupled to the coupling wall 123. The power supply terminal 123b may supply power to the battery of the robot cleaner 200 coupled to the coupling wall 123.

The robot cleaner station 100 may further include a water supply nozzle 123c.

The water supply nozzle 123c may be connected to the supply portion 231 of the water tank 230 of the robot cleaner 200. Specifically, the water supply nozzle 123c may be connected to the inlet of the water tank 230. The inlet is configured to be connected to the water tank 230 of the robot cleaner 200. The water supply nozzle 123c can supply water supplied from the water supply pipe of the kitchen cabinet 2 to the storage space inside the water tank 230 of the robot cleaner 200.

The inner wall 124 is a configuration that spatially separates the receiving space (S) of the mounting unit 120 from the components of the robot cleaner station 100. A pair of inner walls 124 may be arranged on the left and right sides of the base 121. The inner walls 124 may be connected to both ends of the connecting wall 123. The inner walls 124 may extend in a direction intersecting the base 121 from the left and right sides of the base 121. Specifically, the inner walls 124 may extend vertically from the left and right sides of the base 121.

Meanwhile, various components such as a dust collection path 130, a dust collection unit 140, a dust collection motor 145, a detergent container 163, and a waste container 164d may be arranged on the outer side of the inner wall 124. Specifically, the dust collection unit 140, the detergent container 163, and the waste container 164d may be accommodated in the space between the inner wall 124 and the outer wall 111 of the housing 110.

The dust collection unit 140 and the detergent container 163 may be separated from the space between the inner wall 124 and the outer wall 111 of the housing 110 in a sliding manner. The left-right width of the dust collection unit 140 and detergent container 163 may be formed to smaller than the distance between the inner wall 124 and the outer wall 111 of the housing 110.

The washing plate 122 is configured to clean the mop of the robot cleaner 200. The washing plate 122 may be mounted on the washing tank 128 of the base 121. Furthermore, the washing plate 122 may come into contact with the mop 242 while the robot cleaner 200 is mounted.

The washing plate 122 may be formed to slope downward toward the center.

Specifically, the washing plate 122 includes a curved flow guide surface 122c. Furthermore, at least one passage hole 122b through which a fluid can pass may be formed on the flow guide surface 122c. Furthermore, a washing protrusion 122a may be formed to protrude from the flow guide surface 122c.

At this time, a pair of washing protrusions 122a may be symmetrically formed on the flow guide surface 122c. Specifically, the pair of washing protrusions 122a may be arranged vertically below a pair of mops 242 of the robot cleaner 200, facing the pair of mops 242, and may be arranged so as to be in contact with at least a portion of the pair of mops 242.

In addition, a plurality of passage holes 122b may be formed on the flow guide surface 122c, and may be formed between a pair of washing protrusions 122a. For example, a plurality of passage holes 122b may be formed, including a position with the lowest height from the ground (kitchen floor) among the flow guide surface 122c, and may be formed between a pair of washing protrusions 122a. Through this, the fluid discharged between the pair of washing protrusions 122a may be guided and flow into the passage hole 122b.

Meanwhile, the height of the flow guide surface 122c from the kitchen floor may increase as it moves rearward from the position where the passage hole 122b is formed. That is, the height of the flow guide surface 122c from the kitchen floor may increase as it approaches the external air discharge unit 171c, which will be described later.

With this configuration, the wash water and/or air may be guided in flow by the flow guide surface 122c and may escape into the space formed between the washing plate 122 and the washing tank 128 through the passage hole 122b.

When washing water is supplied to the washing plate 122 and the mop 242 rotates, the mop 242 may be washed by friction with the stationary washing protrusion 122a.

Meanwhile, at least a portion of the washing plate 122 may be disposed above a flow path forming portion 128c, which will be described later. That is, the washing plate 122 may further include a reflux flow path cover portion 122d that protrudes upward from the flow guide surface 122c and is coupled to the upper side of the flow path forming portion 128c.

The washing plate 122 of the present embodiment may be formed in a shape corresponding to the shape of the flow path forming portion 128c. For example, the front left portion of the washing plate 122 may protrude upward from the flow guide surface 122c and cover the flow path forming portion 128c on the lower side.

With this configuration, the washing plate 122 and the washing tank 128 may be precisely combined, while providing sufficient space to form a reflux path 125a.

The washing tank 128 is configured to accommodate the washing plate 122. The washing tank 128 may be positioned on the rear side of the base body 121a. The washing tank 128 is positioned below the washing plate 122 and is detachably coupled to the washing plate 122. The washing tank 128 may be formed to correspond to the washing plate 122 so that the washing plate 122 may be inserted therein. Liquid passing through the washing plate 122 may flow into the washing tank 128. The washing tank 128 is placed inside the housing 110, and water used to wash the mop 242 of the robot cleaner 200 may be collected.

The washing tank 128 may include a washing tank base surface through which the fluid passing through the washing plate 122 flows, and a washing tank wall that protrudes vertically from the outer edge of the washing tank base surface. At this time, the height of the washing tank base surface from the ground (kitchen floor) may decrease as it moves toward the rear of the robot cleaner station 100. Through this, the fluid that has passed through the washing plate 122 may be collected at the rear of the washing tank 128 and discharged to the outside through the waste water inlet 164c described later.

At this time, a wastewater pipe connection hole 128d may be formed on the washing tank wall 128b for connection with the wastewater suction nozzle 166a.

Meanwhile, the flow path forming portion 128c may be formed on the washing tank 128. The flow path forming portion 128c may protrude upward from the washing tank base surface 128a to form a reflux path 125a at the lower side. Specifically, at least a portion of the reflux path 125a may be formed between the lower surface of the base 121 and the flow path forming portion 128c.

Meanwhile, in the present disclosure, the washing tank 128 is provided so as to be withdrawable from the mop washing unit 160. That is, the washing tank 128 may be withdrawn from the housing 110 together with the base 121. In addition, the washing plate 122 may also be withdrawn from the mop washing unit 160.

### Door unit:

The door 131 may be provided to cover the entire front end of the housing 110. The door 131 may cover the dust bag drawer 144 and the detergent container 163 to prevent them from being exposed to the outside.

The door 131 may form the front exterior of the robot cleaner station 100 when the entrance 127 is closed. For example, the door 131 may be formed to resemble a rectangular flat plate. The left-right length of the door 131 may be provided to be greater than or equal to the left-right length of the housing 110. With this configuration, the dust bag drawer 144 and the detergent container 163 may be protected from the outside, and the exterior of the robot cleaner station 100 appears neat.

A door frame 132 may be placed at the front of the housing 110. The door 131 is coupled to the door frame 132 so as to be openable and closable. In addition, the door frame 132 may be formed with the entrance 127 through which the robot cleaner 200 may enter and exit, a dust bag withdrawing port 132a through which the dust bag drawer 144 may be coupled so as to be withdrawable, and the detergent container inserting port 132b through which the detergent container 163 may be coupled so as to be withdrawable.

The door frame 132 may form the front exterior of the robot cleaner station 100 when the door 131 is open.

When the door 131 opens the entrance 127, at least one side of the dust bag drawer 144 and at least one side of the detergent container 163 coupled to the door frame 132 may be provided to be exposed to the outside. When the door 131 opens the entrance 127, the front side of the dust bag drawer 144 and the front side of the detergent container 163 are exposed to the outside, and the handle 144d of the dust bag drawer 144 and the handle 163b of the detergent container 163 are exposed to the outside. With this configuration, the dust bag drawer 144 and the detergent container 163 may be easily pulled out or inserted, and a neat appearance may be provided.

The door 131 has a rotation axis 131a positioned at the bottom of the door frame 132, and may be positioned parallel to the floor when the entrance 127 is opened, or may be formed to slope downward as it approaches the front so that the end contacts the ground.

The door 131 may be provided with a hinge portion and may be rotatably connected to the door frame 132. A plurality of hinge portions may be positioned spaced apart from each other along the rotation axis 131a, and may be positioned spaced apart from each other at different intervals.

In addition, the door 131 may be provided with an auxiliary access passage 131b on the surface facing the housing 110 when the entrance 127 is closed. The auxiliary access path 131b is provided to enable the robot cleaner 200 to travel stably toward the mounting unit 120 or the entrance 127, and may be provided with an upward slope toward the rear.

Specifically, the auxiliary access path 131b may be formed in the form of a groove to enable the robot cleaner 200 to travel stably along an inclined slope. The auxiliary access path 131b may be formed with grooves spaced at equal intervals in the front-back direction along the left-right direction. The auxiliary access path 131b may be formed such that its width in the left-right direction narrows toward the rear. Accordingly, the wheel 260 of the robot cleaner 200 may be guided to its original position while limiting its left-right movement as it moves toward the mounting unit 120 or the entrance 127.

The auxiliary access path 131b guides the wheel 260 to the wheel guide unit 121ba positioned on the mounting unit 120. The auxiliary access paths 131b are provided in pairs and can be positioned at respective positions continuous with the pair of wheel guide portions 121ba.

Meanwhile, the door 131 may be operated depending on whether the robot cleaner 200 approaches, whether it has started driving, etc., or can be operated according to an input from the door operating unit 133.

The door frame 132 may detect the approach of the robot cleaner 200 by installing an entry sensor 135. The entry sensor 135 may be positioned at the front of the housing 110 to detect the approach of the robot cleaner 200. For example, the entry sensor 135 may be an IR sensor.

The entry sensor 135 may be installed at the upper portion of the front surface of the door frame 132. This maximizes the detection range. In addition, the entry sensor 135 may be installed at the center of the left and right sides of the entrance 127. This allows the entry direction of the robot cleaner 200 to be guided through communication with the robot cleaner 200.

Meanwhile, to enable the entry sensor 135 to detect the front even when the door 131 is closed to the entrance 127, the door 131 may be formed in a form with a cutout at a location facing the entry sensor 135. Alternatively, the door 131 may be provided with a transparent window at a location facing the entry sensor 135.

The door operating unit 133 is installed on the door frame 132 to rotate the door 131 by user manipulation.

The door operating unit 133 is positioned on the door frame 132 and may include at least one button for operating the door 131. The door operating unit 133 may rotate the door 131 regardless of the position or state of the robot cleaner 200. The door operating unit 133 may have a single button for opening or closing the door 131, or may have a button for opening the door 131 and a button for closing the door 131.

The door operating unit 133 may be positioned within the door frame 132. Furthermore, the door operating unit 133 may be positioned so that at least one button is exposed to the outside.

In this case, the button may be positioned adjacent to the detergent container 163 with respect to the doorway. For example, the button may be positioned above the handle 163b of the detergent container 163.

Meanwhile, when the door 131 closes the entrance 127, the door operating unit 133 is also covered. At this time, in order to enable the door operating unit 133 to be operated even when the entrance 127 is closed, the door 131 is provided with an external button portion 131c. The external button portion 131c is configured with the same number of buttons as the door operating unit 133, and is provided at a position facing each button. The external button portion 131c is formed of an elastically deformable material, so that the button can be pressed when an external force is applied.

The door 131 may be rotated by the door drive unit 134. For example, the door drive unit 134 may include a door drive motor and a drive gear unit.

The door drive motor may be positioned inside the housing 110 and in the upper space of the detergent container 163. The door drive motor may be positioned between the detergent container 163 and the upper cover 113 of the housing 110. Additionally, the door drive motor may be positioned forward in the space provided between the outer wall 111 and the mounting unit 120. That is, the door drive motor may be positioned adjacent to the door operating unit 133.

This improves space utilization and accessibility, providing convenience to the user.

The drive gear unit is provided to transmit power by connecting the door drive motor and the door 131. The driving gear unit transmits the driving force of the door driving motor to the door 131 to rotate the door 131.

### Dust collection unit:

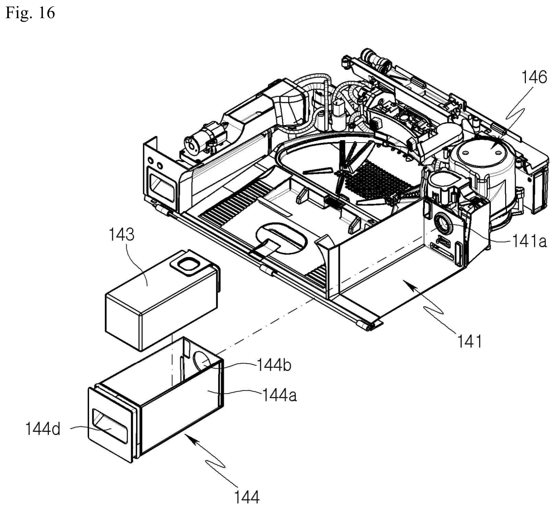

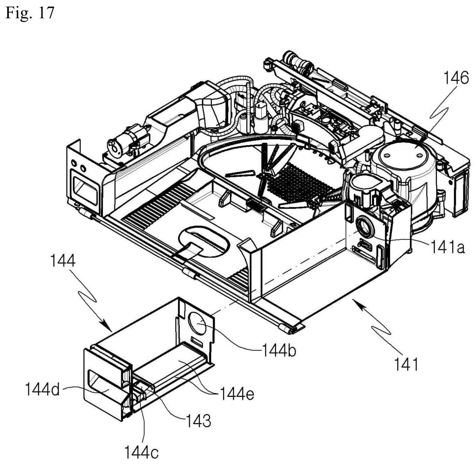

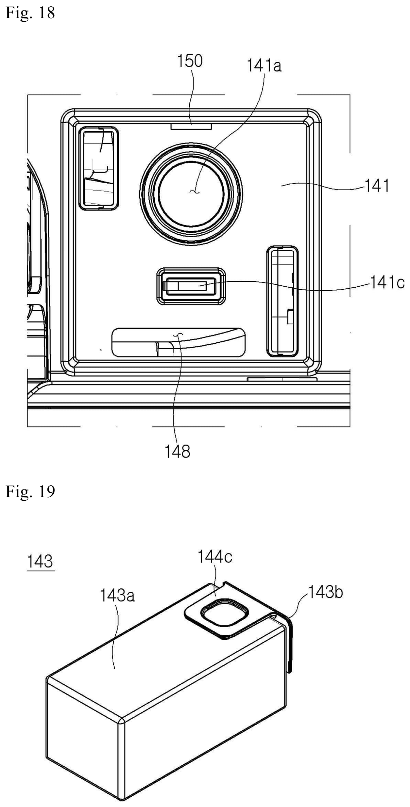

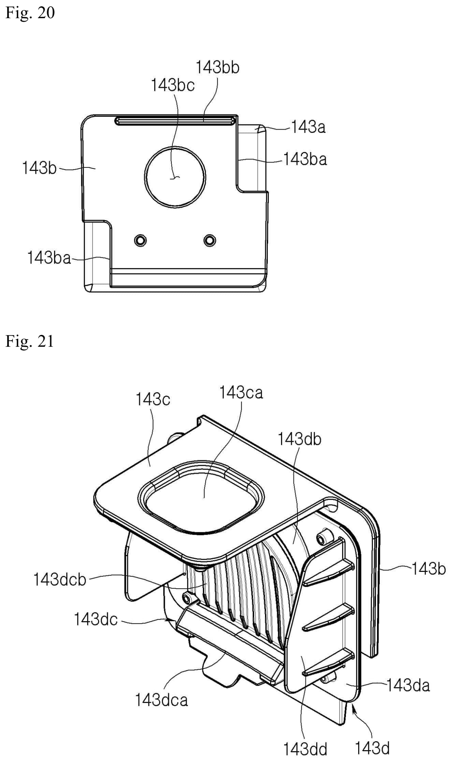

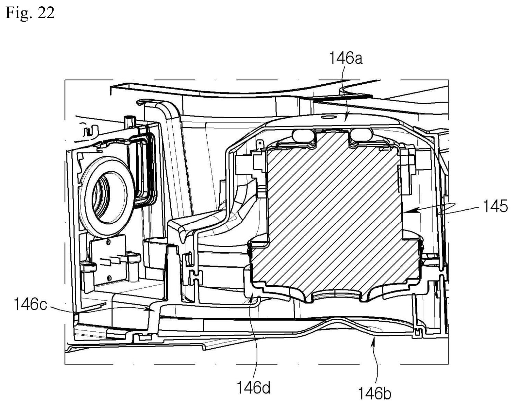

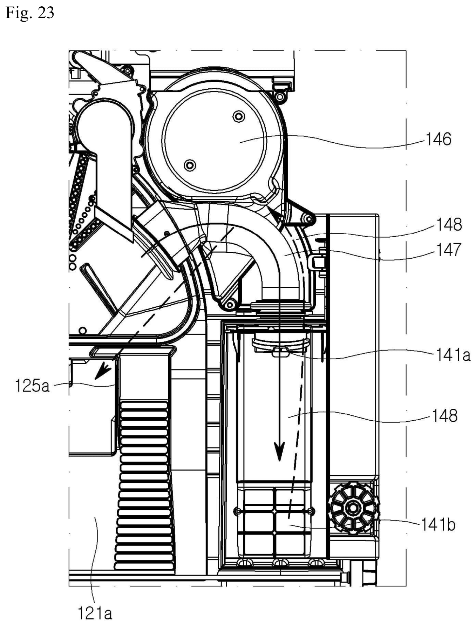

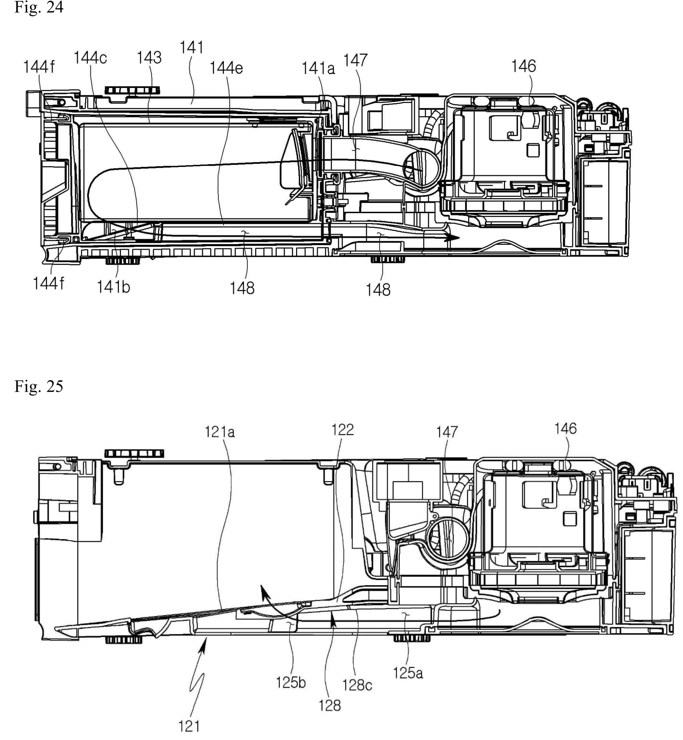

FIGS. 12 to 25 show drawings for explaining a dust collection unit of a robot cleaner station according to an embodiment of the present invention.

Referring to FIGS. 12 to 25 and FIG. 17, the dust collection unit 140 will be described as follows.

The dust collection unit 140 may collect dust from the dust bin 220 of the robot cleaner 200. The dust collection unit 140 may be placed inside the housing 110. The dust collection unit 140 may be placed outside the mounting unit 120. That is, the dust collection unit 140 may be placed between the housing 110 and the mounting unit 120. For example, the dust collection unit 140 may be placed on one side of the left and right direction of the mounting unit 120.

The dust collection unit 140 may include a dust collection unit housing 141, a filter 142, a dust bag drawer 143, a dust collection motor 145, a dust collection motor housing 146, a first duct collection path 147, and a second dust collection path 148.

The dust collection unit housing 141 may define a space that may accommodate dust bag (not show), the filter 142, and the dust bag drawer 144.

The dust collection unit drawer 144 may be withdrawably coupled to the dust collection unit housing 141 so that the dust bag drawer 144 can be withdrawn, and the dust bag (not shown) may be stored inside the dust bag drawer 144. For example, the dust collection unit housing 141 may be formed in a rectangular pipe shape with an open front and a rear inner space may be connected to the first dust collection path 147 and the second dust collection path 148.

Dust inside the dust container 220 may be drawn into the dust collection unit housing 141.

The inner one side of the dust collection unit housing 141 may be connected to the first dust collection path 147 and the other side thereof may be connected to the second dust collection path 148. In addition, when the dust bag (not shown) is coupled to the dust collection unit housing 141, the dust bag (not shown) may be in communication with the first dust collection path 147 within the dust collection unit housing 141.

Specifically, the dust collection unit housing 141 may be formed with an inlet 141a communicating with the first dust collection path 147 and an outlet 141b communicating with the second dust collection path 148.

At this time, the inlet 141a may be positioned above the outlet 141b. This allows air and dust introduced through the inlet 141a to flow downward, allowing the dust to be captured in the dust bag 143 and then discharged through the outlet 141b. During this process, since the air flows from the upper side to the lower side, there is an effect of preventing air from flowing backwards or dust from flying upward.

Meanwhile, in the present embodiment, the outlet 141b may be positioned forward of the inlet 141a. For example, the inlet 141a may be formed on the rear surface of the dust collection unit housing 141, and the outlet 141b may be formed on the lower surface of the dust collector housing 141. In this case, the outlet 141b may be positioned forward of the rear surface of the dust collector housing 141.

Meanwhile, the outlet 141b may be formed by combining the dust collection unit housing 141 and the dust bag drawer 144. In this case, the outlet 141b of the dust collection unit housing 141 and the outlet 144c of the dust bag drawer 144 may refer to the same space.

Meanwhile, the dust collection unit housing 141 may include a dust bag detection unit 141c. The dust bag detection unit 141c may be arranged on the rear surface of the dust collection unit housing 141. The dust bag detection unit 141c may be arranged on the rear surface of the dust collection unit housing 141 toward the dust bag drawer 144.

The dust bag detection unit 141c may detect the dust bag 143. For example, the dust bag detection unit 141c may be a micro switch. The dust bag detection unit 141c may detect the presence of the dust bag 143 by contacting the dust bag 143. Specifically, the dust bag detection unit 141c may detect the presence of the dust bag 143 by contacting the attachment/detachment portion 143b of the dust bag 143.

According to the present disclosure, the dust bag detection unit 141c is provided in the dust collection unit housing, so that when the dust bag 143 is combined, it is possible to detect that the dust bag 143 is mounted.

Meanwhile, a sterilization module 150 may be coupled to the dust collection unit housing 141. For example, a hot air inlet for introducing hot air from the sterilization module 150 and a hot air outlet for exhausting hot air may be formed in the dust collection unit housing 141. At this time, the hot air suction hole and the hot air outlet may be formed on the rear side of the dust collection housing 141 and may be arranged on both left and right sides of the rear side of the dust collection unit housing 141. In addition, the hot air inlet may be arranged closer to the ground than the hot air outlet. That is, the hot air inlet and the hot air outlet may be arranged at diagonal positions on the rear side of the dust collection unit housing 141 in the shape of a square surface. Through this, the flow path of the hot air may be made as far apart as possible.

As another example, a sterilizing module 150 that irradiates light into the interior of the dust collection unit housing 141 may be coupled to the upper surface of the dust collection unit housing 141. At this time, the light may be ultraviolet (UV-C).

The dust bag drawer 144 includes a dust bag drawer body 144a, an inlet 144b, an outlet 144c, a handle 144d, and a flow path forming portion 144e.

The dust bag drawer body 144a may provide a space for coupling a dust bag 143 therein. For example, the dust bag drawer body 144a may be formed in a box shape with an open upper side, and the inlet 144b may be formed on the rear surface to communicate with the first dust collection path 147. At this time, the inlet 144b may be communicated with the inlet 141a of the dust collection unit housing 141.

The upper side of the dust bag drawer body 144a may be communicated with the first dust collection path 147 through the inlet 144b. The inlet 144b may be configured to guide air flowing through the first dust collection path 147 into the interior of the dust bag 143. The inlet 144b may communicate the first dust collection path 147 and the dust bag 143. Accordingly, dust sucked from the dust bin 220 of the robot cleaner 200 may move into the dust bag 143 through the first dust collection path 147, the inlet 141a of the dust collection unit housing 141, and the inlet 144b of the dust bag drawer 144.

The dust bag drawer 144 may communicate with the second dust collection path 148 through an outlet 144c formed on the lower surface (bottom surface). The outlet 144c may be configured to guide air passing through the dust bag 143 to the second dust collection path 148. That is, the outlet 144c may be formed to communicate with an internal space formed by combining the flow path forming portion 144e and the bottom surface of the dust collection unit housing 141.

At this time, the outlet 144c may be arranged at a different height from the inlet 144b. The outlet 144c may be arranged lower than the inlet 144b based on the lower surface (bottom surface) of the dust bag drawer 144. The outlet 144c may connect the internal space of the dust bag drawer 144 with the second dust collection path 148. Therefore, air filtered of dust while passing through the dust bag 143 may move to the second dust collection path 148 via the outlet 144c.

Meanwhile, in the present embodiment, the outlet 144c may be arranged forward of the inlet 144b. For example, the outlet 144c may be arranged closer to the handle 144d than the inlet 144b.

Meanwhile, the dust bag drawer 144 forms a flow path for discharging air that has passed through the dust bag 143 to the dust collection motor 145. That is, the dust bag drawer 144 includes a flow path forming portion 144e that protrudes upward from the bottom surface of the dust bag drawer body 144a and forms a flow path between it and the dust collection unit housing 141.

The flow path forming portion 144e is provided on the lower surface of the dust bag drawer body 144a and may form at least a portion of the second dust collection path 148. The flow path forming portion 144e may be formed such that a pair of side walls facing each other on the lower surface (bottom surface) of the dust bag drawer body 144a are bent upward and extended, and are covered by an upper wall connecting the pair of side walls.

Accordingly, at least a portion of the second dust collection path 148 may be formed by combining the path-forming portion (144e) and the bottom surface of the dust collection unit housing (141).

Meanwhile, the path forming portion 144e may be formed along the longitudinal direction of the dust bag drawer 144. At this time, an exhaust port 144c may be formed at one longitudinal end of the path-forming portion 144e.

Accordingly, air introduced into the outlet 144c may flow rearward along the longitudinal direction of the path-forming portion and be discharged to the dust collection motor 145.

Meanwhile, the remainder of the second dust collection path 148 may be a space formed by combining the dust collection motor support portion 146c and the dust collection motor lower housing 146b, which will be described later.

Therefore, in this embodiment, the first dust collection path 147 and the second dust collection path 148 may be formed at different heights. That is, the first dust collection path 147 and the second dust collection path 148 may be arranged in a layered structure. At this time, at least a portion of the first dust collection path 147 may be arranged above the second dust collection path 148.

In addition, the first dust collection path 147 and the second dust collection path 148 may be formed on different surfaces of the dust collection unit housing 141. For example, the first dust collection path 147 may be formed on the rear surface of the dust collection unit housing 141, and the second dust collection path 148 may be formed along the lower surface of the dust collection unit housing 141.

Through this, air drawn in from the upper rear side of the dust bag drawer 144 flows toward the lower front side of the dust bag drawer 144 while passing through the dust bag 143, so that air containing dust can be evenly distributed inside the dust bag 143, and dust can be prevented from accumulating concentratedly at a specific location of the dust bag 143.

Meanwhile, the handle 144d may be provided at the front of the dust bag drawer body 144a. The handle 144d may be provided so that a user can grip it. For example, the handle 144d may be a groove-shaped recessed shape formed rearward on the front surface of the dust bag drawer body 144a.

Therefore, according to the present disclosure, a user can easily pull the dust bag drawer 144 forward (in the first direction) and then lift the dust bag 143 upward (in the second direction) to remove and replace it.

Meanwhile, in the present embodiment, the dust bag drawer 144 may further be provided with a gasket. The gasket may be arranged around the front end of the dust bag drawer 144. The gasket can seal the gap formed between the dust bag drawer 144 and the dust bag drawer 144 when the dust bag drawer 144 is inserted into the dust collection unit housing 141.

Meanwhile, a sensor passage hole 144g may be formed in the dust bag drawer 144. The sensor passage hole 144g may be formed so that at least a portion of the dust bag detection unit 141c of the dust collection unit housing 141 may pass through it. For example, the sensor passage hole 144g may be formed in a square hole shape at a position facing the dust bag detection unit 141c. Accordingly, at least a portion of the dust bag detection unit 141c may be positioned to pass through the sensor passage hole 144g, and when the dust bag 143 is coupled to the dust bag drawer 144, the dust bag 143 may come into contact with the dust bag.

The filter 142 may be provided in the dust bag drawer 144. The filter 142 may be placed in the outlet 144c of the dust bag drawer 144. That is, the filter 142 may be placed on the lower surface of the dust bag drawer 144. Accordingly, the filter 142 may be taken out together with the dust bag drawer 144 when the dust bag drawer 144 is taken out. Meanwhile, the filter 142 may be placed lower than the dust bag 143.

The filter 142 may filter foreign substances from the air discharged after flowing through the internal space of the dust bag 143 and the dust bag drawer 144. Through this, the filter 142 may prevent foreign substances from entering the dust collection motor 145 and damaging the dust collection motor 145. For example, the filter 142 may be a pre-filter.

The dust bag 143 may refer to a dust bag that captures dust sucked from the inside of the dust bin 220 of the robot cleaner 200 by the dust collection motor 145.

The dust bag 143 may be detachably connected to the dust bag drawer 144.

At this time, the dust bag drawer 144 may be detachably connected to the dust collection unit housing 141 along a first direction, and the dust bag 143 may be detachably connected to the dust bag drawer 144 along a second direction intersecting the first direction. For example, the dust bag drawer 144 may be detachably connected to the dust collection unit housing 141 in a forward and backward direction, and the dust bag 143 may be detachably connected to the dust bag drawer (144) along a vertical direction.

The dust bag 143 may be separated from the dust bag drawer 144 and discarded, and a new dust bag 143 may be connected to the dust bag drawer 144. That is, the dust bag 143 may be defined as a consumable part.

The dust bag 143 includes a dust bag body 143a, a detachable portion 143b, a light-emitting portion 143c, and an air suction portion 143d.

The dust bag body 143a may capture dust. When suction power is generated by the dust collection motor 145, the dust bag body 143a may be configured to expand in volume and accommodate dust internally. To this end, the dust bag body 143a may be made of a material that is permeable to air but impermeable to foreign substances such as dust. For example, the dust bag body 143a may be made of a non-woven material and, when expanded, can have a hexahedral shape corresponding to the shape of the dust bag drawer 144.

The detachable portion 143b is coupled to the dust bag body 143a and can be detachably coupled to the rear surface of the dust bag drawer 144 in a sliding manner. For example, the detachable portion 143b may be formed in a flat plate shape, coupled to the rear surface of the dust bag body 143a, and detachably coupled to the dust bag coupling portion arranged on the rear surface of the dust bag drawer 144 in a sliding manner.

At this time, the detachable portion 143b may be formed in an overall rectangular plate shape. At this time, the vertical height and the left-right width of the detachable portion 143b may be formed to be equal to or greater than the vertical height and the left-right width of the rear surface of the dust bag body 143a. This allows a user to easily grip the detachable portion 143b and couple it to the dust bag drawer 144.

Meanwhile, depending on the embodiment, the rectangular plate-shaped detachable portion 143b may be formed by cutting out two diagonally opposite corners. For example, the cutout portion 143ba may be formed by cutting out two diagonally opposite corners of the detachable portion 143b into a rectangular shape. This may be a location connected to the inlet and outlet channels for hot air for sterilization. Through this, the dust bag 143 may be sterilized using hot air.

With this configuration, the dust bags 143 may be connected vertically. Therefore, in dust bags 143 whose horizontal length is longer than their vertical height, the volume of the structure required for mounting the dust bag 143 may be reduced. As a result, the dust collection capacity can be expanded within a limited space.

Meanwhile, a stopper 144bb may be formed on the detachable portion 143b. The stopper 144bb may be formed to protrude from the upper portion of the outer surface (the surface facing the dust bag drawer 144) of the detachable portion 143b toward the dust bag drawer 144. At this time, the stopper 144b may be formed to protrude in the shape of a rib along the left-right direction (width direction). With this configuration, when the dust bag 143 is coupled to the dust bag drawer 144, the stopper 144b may be caught on the upper portion of the rear surface of the dust bag drawer 144. Accordingly, even if the dust bag 143 is coupled to the dust bag drawer 144, the upper part of the detachable portion 143b may be exposed to the upper side, and the user may conveniently detach the dust bag 143 by holding the stopper 144b and lifting it upward.

Meanwhile, an inlet 143bc through which dust from the dust bin 220 flows in may be formed in the detachable portion 143b. The inlet 143bc may be arranged to communicate with the inlet 144b of the dust bag drawer 144. Accordingly, when the dust collection motor 145 is operated, air and dust within the dust bin 220 may flow into the dust bag body 143a and be collected. The inlet 143bc may be communicated with an inlet pipe 143db to be described later.

The light-emitting portion 143c is coupled to the dust bag body 143a and may transmit light into the interior of the dust bag body 143a. At this time, the light-emitting portion 143c and the detachable portion 143b may be arranged on different surfaces of the dust bag body 143a. For example, the light-emitting portion 143c may be formed in a flat plate shape, coupled to the upper surface of the dust bag body 143a, and can transmit light irradiated from a sterilizing module arranged on the inner upper surface of the dust collection unit housing.

At this time, the light-transmitting portion 143c may be formed as an overall rectangular plate. At this time, the light-transmitting portion 143c may be formed integrally with the detachable portion 143b. Specifically, the light-transmitting portion 143c may be formed in a form that is formed by bending and extending from the detachable portion 143b. This provides the effect of stably supporting the light-transmitting portion 143c when the detachable portion 143b is coupled to the dust bag drawer 144.

Meanwhile, the light-transmitting portion 143c may be optionally configured with the cutout portion 143ba, but both may also be provided. This improves the hygiene of the dust bag 143.

The light-transmitting portion 143c is provided with a light-transmitting window 143ca. The light-transmitting window 143ca is formed of a material that allows light to pass through. Specifically, the light-transmitting window 143ca may be formed of a material that transmits light, including ultraviolet light. For example, the light-transmitting window 143ca may be formed of a material that transmits UV-C light.

The light-transmitting window 143ca may be positioned facing the light source of the sterilizing module 150 provided in the dust collection unit housing 141. Therefore, light irradiated from the light source can pass through the light-transmitting window 143ca and sterilize the interior of the dust bag body 143a.

With this configuration, insects and microorganisms, including powdery mildew, present inside the dust bag 143, thereby improving hygiene.

Meanwhile, the detachable portion 143b may be provided with an inlet 143d through which dust from the dust bin 220 flows. The inlet 143d may be positioned to communicate with the inlet 144b of the dust bag drawer 144. Therefore, when the dust collection motor 145 is operated, air and dust inside the dust bin 220 may be introduced into the dust bag body 143a and collected.

Meanwhile, the dust bag 143 may further include an air inlet 143d inside the bag-shaped dust bag body 143a. The air inlet 143d may be positioned facing the detachable portion 143b with the dust bag body 143a interposed therebetween. The air inlet 143d may be coupled to the detachable portion 143b with the dust bag body 143a interposed therebetween. That is, if the detachable portion 143b is provided on the rear outer surface of the dust bag body 143a, the air inlet 143d may be provided on the rear inner surface of the dust bag body 143a. Through this, the shape of the rear portion of the bag-shaped dust bag body 143a may be supported, and the connecting portion of the dust bag body 143a and the detachable portion 143b may be prevented from being damaged, causing the bag portion of the dust bag body 143a to burst and scatter dust.

The air inlet 143d may include an air inlet plate 143da, an inlet pipe 143db, an inlet cover 143dc, and a guide wall 143dd.

The inlet plate 143da is formed in a flat shape, and one side is arranged to face the detachable portion 143b and is coupled to the detachable portion 143b and/or the dust bag body 143a. The inlet pipe 143db and the guide wall 143dd may be protruded on the other side.

For example, the inlet plate 143da may be formed in a square flat shape, with the four corners formed in a curved shape. This configuration can prevent the dust bag body 143a from being damaged by the corners.

The inlet pipe 143db may be formed in a cylindrical shape protruding from the inlet plate 143da. In this case, the inlet pipe 143db may be formed along the extraction direction of the dust bag drawer 144. Through this, air can be smoothly introduced from the dust bin 220 positioned behind the dust bag 143.

Meanwhile, the inlet pipe 143db may not have a uniform protruding height. For example, the protruding height of the inlet pipe 143db may increase from the vertical downward direction toward the upward direction. This allows the inlet cover 143dc to close the inlet pipe 143db with a uniform surface pressure.

The inlet pipe 143db is formed with an inlet port and may be connected to an inlet port 143bc formed in the detachable portion 143b. Therefore, the inlet pipe 143db may guide dust within the dust bin 220 into the dust bag body 143a.

The inlet cover 143dc may open and close the inlet hole. The inlet cover 143dc may be formed with a larger diameter than the inlet pipe 143db.

The inlet cover 143dc includes a fixed member 143dca fixedly connected to the inlet plate 143da and an opening/closing member 143dcb that opens/closes the inlet pipe by the suction force of the dust collection motor 145. At this time, when the dust bag 143 is connected to the dust bag drawer 144, the fixed member 143dca may be positioned lower than the opening/closing member 143dcb.

With this configuration, when the dust collection motor 145 is operated, the upper portion of the inlet pipe 143db opens first, allowing air to flow into the upper portion of the internal space of the dust bag 143. Therefore, dust entering the dust bag 143 may be prevented from accumulating directly below the inlet.

Additionally, the inlet cover 143dc may be formed of an elastic material. For example, the inlet cover 143dc may be formed of a resin or rubber material. Therefore, when the dust collection motor 145 is operated, the opening/closing member 143dcb may rotate due to the suction force of the dust collection motor 145, thereby opening and closing the inlet.

The guide wall 143dd may guide the flow direction of air passing through the inlet pipe 143db. The guide walls 143dd may be formed as a pair protruding from the inlet plate 143da. The pair of guide walls 143dd may be formed along the vertical direction of the inlet plate 143da.

At this time, the inlet pipe 143db and the inlet cover 143dc may be arranged between the pair of guide walls 143dd. At this time, the protrusion height of the pair of guide walls 143dd may be greater than that of the inlet pipe 143db.

With this configuration, the pair of guide walls 143dd may block the air flowing between the inlet pipe 143db and the inlet cover 143dc from spreading left and right and may guide it to flow forward of the cleaner station 100.

Therefore, the air flowing into the dust bag 143 through the pair of guide walls 143dd may be evenly distributed throughout the entire dust bag 143.

The dust collection unit 140 may further include a dust collection module. The dust collection module may provide a suction airflow to the dust collection path.

Specifically, the dust collection unit 140 may further include a dust collection motor 145 and a dust collection motor housing 146.

The dust collection motor 145 may be configured to generate suction force in the dust collection path 147 and 148. That is, the dust collection motor 145 may provide suction power to suck dust inside the dust bin 220 into the dust bag 143 placed inside the dust collection unit housing 141.

The dust collection motor 145 may be disposed in the rear of the dust collection unit housing 141. Through this, the dust collection motor 145 may provide suction power for sucking up dust in the dust bin 220 of the robot cleaner 200.

The dust collection motor 145 may be configured to generate suction power by rotation. For example, although not shown, the dust collection motor 145 may include a rotor and a stator that rotate relative to each other when powered, and an impeller that rotates around a rotational axis according to the rotation of the rotor. Accordingly, a suction force may be generated by the rotation of the impeller.

The dust collection motor 145 may have one side connected to the second dust collection path 148 and the other side connected to the air circulation path. when the dust collection motor 145 is driven, air flowing through the second dust collection path 148 may flow into the dust collection motor housing 146. The air introduced into the dust collection motor housing 146 may pass through the dust collection motor 145 and the circulation path. then, the air may be discharge to the air reflux path 125a.

Meanwhile, in the present embodiment, the rotation axis of the dust collection motor 145 may be arranged along the vertical direction. In this case, the horizontal space occupied by the dust collection motor 145 may be minimized.

Meanwhile, when the rotation axis of the dust collection motor 145 is arranged along the vertical direction, the heights of the side where air flows into the dust collection motor 145 and the side where air is discharged from the dust collection motor 145 may be arranged differently. Accordingly, the structure of the dust collection motor housing 146 may be formed.

The dust collection motor housing 146 may accommodate the dust collection motor 145 therein. The dust collection motor housing 146 may be arranged at the rear of the dust collection unit housing 141. Additionally, the dust collection motor housing 146 may be arranged at the rear of the first dust collection passage 147. Additionally, the dust collection motor housing 146 may be positioned at the rear of the second dust collection path 148.

That is, the dust collection unit housing 141 may be positioned at the frontmost position based on the front-to-rear direction of the robot cleaner station 100, and the first dust collection path 147 and the second dust collection path 148 may be positioned at the rear of the dust collection unit housing 141. Furthermore, the dust passage hole 123a may be positioned at the rear of the first dust collection path 147, and the dust collection motor housing 146 may be positioned at the rear of the second dust collection path 148. Furthermore, the dust collection motor housing 146 may be positioned at the rear of the dust passage hole 123a.

Therefore, the dust collection unit 140 is positioned along the front-to-rear direction of the robot cleaner station 100, thereby reducing the overall height.

In this embodiment, the dust collection motor housing 146 includes a dust collection motor upper housing 146a, a dust collection motor lower housing 146b, a dust collection motor support 146c, and a motor damper 146d.

At this time, the dust collection motor 145 is mounted on the dust collection motor support 146c, the dust collection motor upper housing 146a is coupled to the upper side of the dust collection motor support 146c, and the dust collection motor lower housing 146b may be arranged below the dust collection motor 145. Meanwhile, the motor damper 146d may be coupled between the dust collection motor support 146c and the dust collection motor upper housing 146b.

Through this arrangement, the dust collection motor 145 may be mounted on the dust collection motor support 146c, the motor damper 146d may be coupled, and then the dust collection motor upper housing 146a may be assembled. The dust collection motor lower housing 146b may be assembled to the lower surface of the housing 1110.

Therefore, the dust collection motor housing 146 components may be assembled to the upper and lower sides of the dust collection motor 145, facilitating assembly and repair work.

The dust collection motor upper housing 146a may cover the upper side of the dust collection motor 145. The dust collection motor upper housing 146a may include a motor housing portion that accommodates a portion of the upper side of the dust collection motor 145 and an upper flow path forming portion that is connected to the motor housing portion and forms a flow path therein.

The motor housing may be formed in a cylindrical shape with a closed top. Air discharged from the dust collection motor 145 may flow through the space between the motor housing and the dust collection motor 145 and may be discharged through the upper flow path forming portion.

The upper flow path forming portion may extend radially outward from the outer circumference of the motor housing. This may guide the flow direction of air discharged between the motor housing and the dust collection motor 145. In addition, a groove may be formed on the upper surface of the upper flow path forming portion to accommodate at least a portion of a pipe or hose forming the first dust collection path 147.

With this configuration, at least a portion of the first dust collection path 147 may pass through the upper portion of the upper flow path forming portion.

The upper flow path forming portion may form at least a portion of a reflux path 125a therein. Specifically, the space formed by combining the upper flow path forming portion and the dust collection motor support 146c may form a portion of the reflux flow path 125a.

The dust collection motor lower housing 146b may cover the lower side of the dust collection motor 145. The dust collection motor lower housing 146b may be coupled to the lower surface of the drawer 190. The dust collection motor lower housing 146b may include a lower cover portion positioned on the lower side of the dust collection motor 145 and a lower flow path forming portion connected to the lower cover portion and forming a flow path for air flowing into the dust collection motor 145.

The lower cover portion may be formed in a circular shape, with the center of the circle raised toward the dust collection motor 145. This configuration can guide the upward flow of air flowing into the dust collection motor 145.

The lower flow path forming portion may extend radially outward from the lower cover portion. This can guide the flow of air flowing from the dust collection unit housing 141 to the dust collection motor 145.

The lower flow path forming portion may form at least a portion of the second dust collection path 148 within it. Specifically, the space formed by the lower flow path forming portion and the dust collection motor support 146c joining together may form a portion of the second dust collection path 148.

The dust collection motor support 146c may support the dust collection motor 145.

The dust collection motor support 146c may be connected to various components forming the internal structure of the robot cleaner station 100. The dust collection motor support 146c may be connected to the dust collection unit housing 141. The dust collection motor support 146c may be connected to the inner wall 124 or the coupling wall 123 of the mounting unit 120. Through this, the dust collection motor support 146c may provide a supporting force capable of supporting the dust collection motor 145.

The dust collection motor support 146c may be connected to the dust collection motor upper housing 146a and the dust collection motor lower housing 146b to form the reflux path 125a and the second dust collection path 148, respectively. Specifically, the second dust collection path 148 may be formed on the lower side of the dust collection motor support 146c, and the reflux path 125a may be formed on the upper side of the dust collection motor support 146c.

Through this arrangement, multiple paths may be arranged to be stacked on top of each other, maximizing space efficiency within a limited height.

As a result of this arrangement, air drawn into the dust bin 220 may pass between the dust collection motor support 146c and the dust collection motor lower housing 146b, enter the dust collection motor 145, and then pass through the dust collection motor 145 to be discharged between the dust collection motor support 146c and the dust collection motor upper housing 146a.

Therefore, according to the present invention, the dust collection motor 145 may be arranged vertically, and two channels separated vertically can be formed through the dust collection motor support 146c. Therefore, the channels required for dust collection within a limited height and left-right space can be stacked and arranged, and the stacked channels can be used to allow air to flow in and out, thereby maximizing space efficiency.

Meanwhile, the motor damper 146d is coupled between the dust collection motor support 146c and the dust collection motor 145, and may elastically support the dust collection motor 145.

The motor damper 146d may be coupled between the dust collection motor support 146c and the dust collection motor upper housing 146a. That is, the upper side of the motor damper 146d may be coupled to the dust collection motor upper housing 146a, and the lower side of the motor damper 146d may be coupled to the dust collection motor support 146c. With this configuration, when the dust collection motor support 146c and the dust collection motor upper housing 146a are coupled, the motor damper 146d may be fixed between the dust collection motor support 146c and the dust collection motor upper housing 146a to secure support.

Meanwhile, the motor damper 146d may be formed of an elastic material.

Therefore, according to the present invention, by arranging the dust collection motor 145 along a vertical direction and providing the damper 146d at its lower side, vibration and noise generated by the operation of the dust collection motor 145 may be reduced.

Therefore, according to the present invention, the damper 146d has the effect of preventing air leakage by sealing the reflux flow path 125a formed between the dust collection motor support 146c and the dust collection motor upper housing 146a.

Meanwhile, the dust collection unit 140 may further include dust collection paths 147 and 148. The dust collection path may refer to a path through which air sucked in through the dust passage hole 123a flows through the dust bag to the dust collection motor 145.

Specifically, the dust collection path may include a first dust collection path 147 that connects the dust bin 220 and the internal space of the dust collection unit housing 141 when the robot cleaner 200 is coupled to the robot cleaner station 100 and the dust passage hole 123a and the dust bin 220 of the robot cleaner 200 are connected, and a second dust collection path 148 that connects the internal space of the dust collection unit housing 141 and the internal space of the dust collection motor housing 146.

The first dust collection path 147 may connect the dust bin 220 of the robot cleaner 200 and the internal space of the dust collection unit housing 141. The first dust collection path 147 may connect the dust passage hole 123a of the mounting unit 120 and the internal space of the dust collection unit housing 141. The first dust collection path 147 may be formed along a direction intersecting the vertical direction. For example, the first dust collection path 147 may be formed close to the horizontal direction. The first dust collection path 147 may be a space formed rearward from the dust passage hole 123a, or may be a path formed by bending toward the side from the dust passage hole 123a so that dust and air can flow. Through the first dust collection path 147, dust in the dust bin 220 of the robot cleaner 200 may move to the internal space of the dust collection unit housing 141.

The second dust collection path 148 may connect the internal space of the dust collection unit housing 141 and the internal space of the dust collection motor housing 146. The second dust collection path 148 may be formed along a direction intersecting the vertical direction. For example, the second dust collection path 148 may be formed close to the horizontal direction.

In this case, in the present disclosure, the first dust collection path 147 and the second dust collection path 148 may be formed at different heights. That is, the first dust collection path 147 and the second dust collection path 148 may be arranged in a stacked structure. At least a portion of the first dust collection path 147 may be arranged above the second dust collection path 148.

With this configuration, multiple paths can be arranged close to the horizontal direction to reduce the overall height, while stacking them to minimize the left-right width and overall volume of the robot cleaner station 100.

The air reflux unit 125 may guide air discharged from the dust collection motor 145 to the robot cleaner 200.

The air reflux unit 125 may be composed of a reflux path 125a and an air reflux hole 125b.

The reflux path 125a may provide a path through which air discharged from the dust collection motor 145 flows. The reflux path 125a may be formed by the dust collection motor housing 146 and the base 121. Specifically, one side of the reflux path 125a may be a space formed by combining the dust collection motor support 146c and the dust collection motor upper housing 146a. Additionally, the other side of the reflux path 125a may be arranged inside the base body 121a. For example, the reflux path 125a may be a space formed between the upper and lower surfaces of the base body 121a.

Accordingly, one side of the reflux path 125a may pass through the dust collection motor housing 146. Furthermore, the other side of the reflux path 125a may pass through the lower side of the base 121. Furthermore, at least a portion of the reflux path 125a may be positioned lower than the robot cleaner 200 mounted on the upper side of the base body 121a.

The reflux path 125a may be connected to the dust collection motor 145 via a flow path. One end of the reflux path 125a may be in communication with the internal space of the dust collection motor housing 146, and the other end of the reflux path (125a) may be in communication with the air reflux hole 125b.

The reflux path 125a may be a flow path formed along a direction intersecting the vertical direction. For example, the reflux path 125a may be a path formed horizontally within the housing 110.

At this time, at least a portion of the reflux path 125a may be positioned below the first dust collection path 147. That is, the reflux path 125a may be positioned to pass through the lower side of the first dust collection path 147. Accordingly, the flow directions of the air flowing through the first dust collection path 147 and the air flowing through the reflux path 125a may intersect each other on a horizontal plane.

In addition, at least a portion of the reflux path 125a may be positioned above the second dust collection path 148. That is, the reflux path 125a may be positioned to pass through the upper side of the second dust collection path 148.

Through this, the first dust collection path 147, the second dust collection path 148, and the reflux path 125a may be arranged vertically (stacked) within a limited height, thereby maximizing space efficiency.

In addition, by forming the reflux path 125a by utilizing the excess space within the base 121, the height of the robot cleaner station 100 may be prevented from increasing, and since a separate space for forming the path is not required, space efficiency may be maximized.

The air reflux port 125b may be formed in the base 121. The air reflux hole 125b may be formed in the agitator accommodatin portion 121d. At this time, the suction port 211 of the robot cleaner 200 may be arranged above the agitator accommodating portion 121d. Accordingly, the reflux path 125a may discharge air to the lower side of the suction port 211, and air passing through the reflux path 125a may be introduced into the suction port 211 located immediately above.

Therefore, the reflux path 125a according to the embodiment of the present disclosure may guide the air discharged from the dust collection motor 145 to the suction port 211 of the robot cleaner 200.

The reflux path 125a may create a structure in which the air continuously circulates between the robot cleaner 200 and the robot cleaner station 100 by guiding the air discharged from the dust collection motor 145 to the suction port 211 of the robot cleaner 200 without discharging it to the outside. Accordingly, the heat discharged from the dust collection motor 145 is not discharged to the kitchen cabinet 2, but is re-introduced and circulated into the interior of the robot cleaner 200, thereby preventing damage to the interior of the kitchen cabinet 2.

The air passing through the dust collection motor 145 is discharged to the accommodating space (S) through the air reflux hole 125b, and the air discharged to the accommodating space (S) may be re-introduced to the suction port 211 due to the suction force of the dust collection motor 145. Accordingly, the air sucked into the dust bin 220 by the suction force of the dust collection motor 145 may flow sequentially through the dust passage hole 123a, the first dust collection passage 147, the dust collection unit housing 141, the second dust collection passage 148, the dust collection motor 145, the reflux passage 125a, and the air reflux hole 125b and then be discharged into the accommodating space (S).

At this time, the dust collection motor 145 may be driven simultaneously with the suction motor (not shown) of the robot cleaner 200. Air exhausted through the air reflux hole 125b is sucked into the suction port 211 by the suction power of the suction motor (not shown) in addition to the dust collection motor 145, thereby improving dust collection efficiency.

### Sterilization Module:

The robot cleaner station 100 according to one embodiment of the present disclosure may further include a sterilization module 150. The sterilization module 150 may be coupled to the dust collection unit housing 141.

In the robot cleaner station 100 according to one embodiment of the present invention, the sterilization module 150 may sterilize the dust bag 143. Specifically, the sterilization module 150 may irradiate light onto the dust bag 143.

The sterilizing module 150 may include a light source that emits sterilizing light and a protective panel positioned beneath the light source to protect the light source.

Here, the light source may include at least one light-emitting diode (LED) capable of emitting sterilizing light with sterilizing power capable of eliminating bacteria. The sterilizing light emitted by the light source may have a wavelength that varies depending on the type of LED.

For example, the light source may be a light-emitting diode that emits ultraviolet light in the UV-C wavelength range. Ultraviolet light is classified into UV-A (315 nm to 400 nm), UV-B (280 nm to 315 nm), and UV-C (200 nm to 280 nm) depending on its wavelength. Among these, ultraviolet light in the UV-C range can damage the DNA double helix of microorganisms and inhibit their proliferation.

Meanwhile, the sterilizing module 150 may be positioned on the inner upper surface of the dust collection housing 141. The sterilization module 150 may irradiate light downward. This allows light to be irradiated into the dust bag 143 regardless of the presence of dust, as dust will settle downward due to gravity.

Meanwhile, the sterilization module 150 according to another embodiment of the present invention can supply hot air to the dust bag 143.

The sterilization module 150 may include a fan that generates air flow, a heater that supplies heat to air flowing into the dust collection housing 141, and a duct that guides the hot air into the dust collection housing 141.

The hot air supplied from the sterilization module 150 passes through the dust collection housing 141 and the dust bag drawer 144, supplies heat to the dust bag 143, and sterilizes insects and microorganisms.

### Mop washing unit:

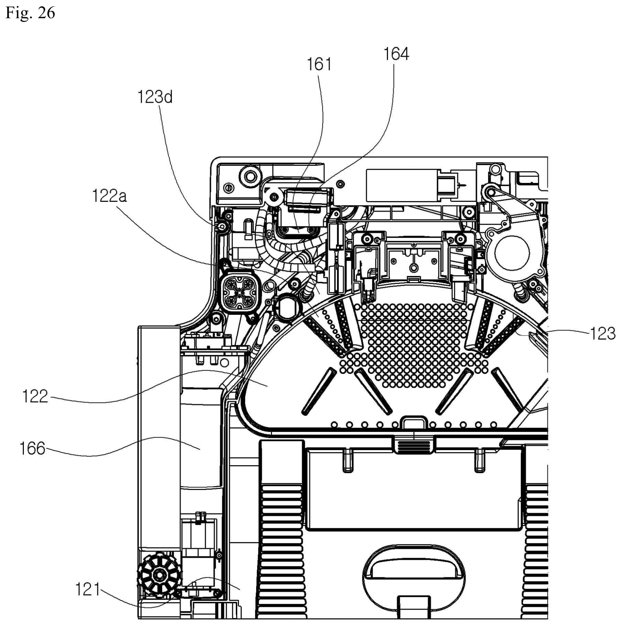

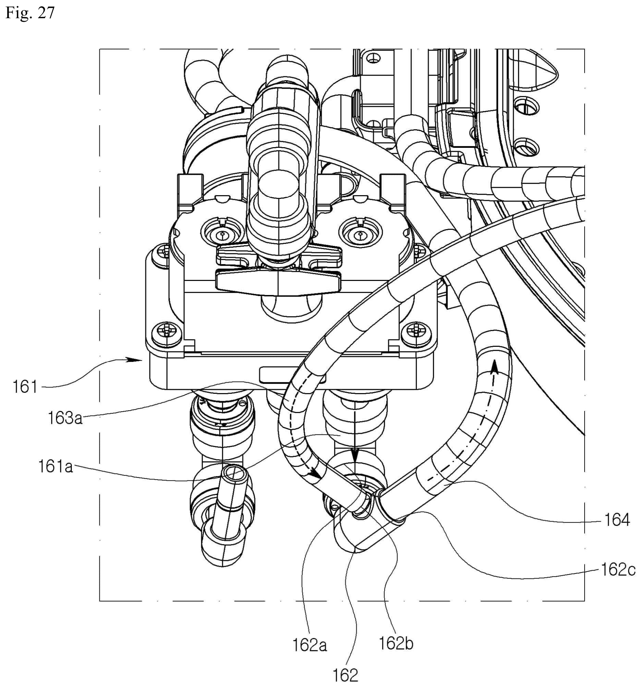

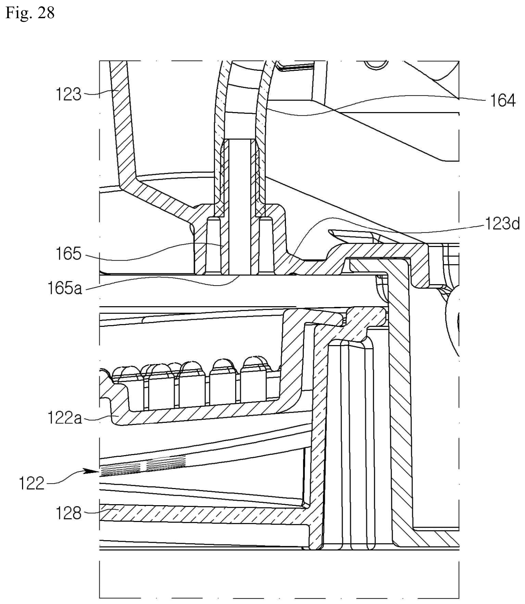

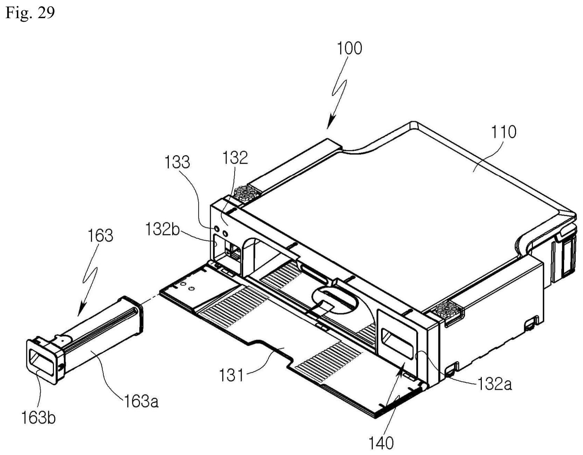

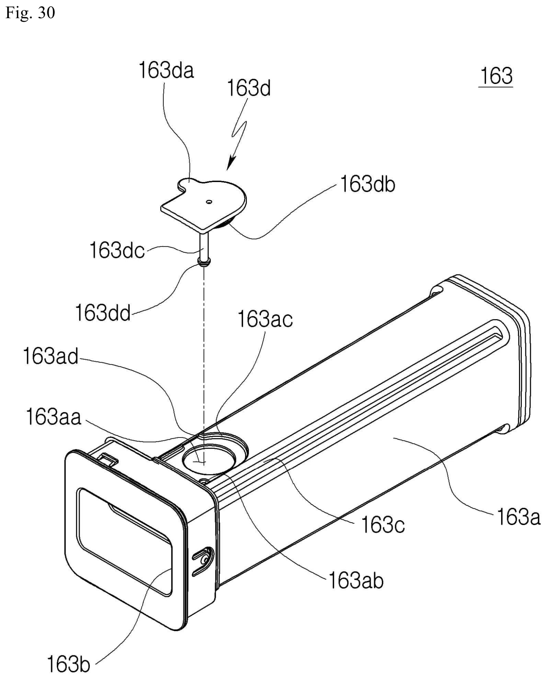

Referring to FIGS. 26 to 30, the mop washing unit 160 of the robot cleaner station 100 according to an embodiment of the present disclosure will be described as follows.

The robot cleaner station 100 according to an embodiment of the present disclosure may include the mop washing unit 160. Wash water may be supplied to the mop 242 to wash the mop 242, and waste water after washing the mop 242 may be drained.

The mop washing unit 160 may include a washing water supply unit that mixes a liquid containing detergent and purified water and discharges the mixture to the upper side of the washing plate 122. The washing water supply unit may include a regulator 161, a mixing chamber 162, a detergent container 163, a branch flow path 164, and a wash water nozzle 165.

At this time, the detergent container 163 and the wastewater tank 166 may be accommodated in a space formed between the inner wall 124 and the outer wall 111 of the housing. The detergent container 163 may be positioned on the lower side of the space between the inner wall 124 and the outer wall 111 of the housing, and the wastewater tank 166 may be positioned on the upper side of the detergent container 163.

The water supply pipe of the kitchen cabinet 2 is connected to a regulator 161, so that the flow rate supplied from the water supply pipe can be controlled. In addition, a portion of the purified water passing through the regulator 161 may be supplied to the water tank 230 of the robot cleaner 200 through the water supply nozzle 123c, and the remainder may be supplied to the mixing chamber 162.

In addition, the liquid containing the detergent stored in the detergent container 163 may be supplied to the mixing chamber 162 through the fluid force of a pump. The detailed structure of the detergent container 163 will be described later.

The mixing chamber 162 has a space into which liquid containing detergent and purified water can be respectively introduced and mixed, and can discharge washing water mixed with detergent and purified water. This mixing chamber 162 may be provided with a purified water inlet 162a, a detergent inlet 162b, and a branch flow path connection hole 162c.

The mixing chamber 162 may be provided inside the housing 110, and may be positioned rearward of the mounting unit 120. At this time, a flow path 161a through which purified water is introduced from the regulator 161 may be connected to the purified water inlet 162a. In addition, a flow path 163a through which a liquid containing detergent is introduced from the detergent container 163 may be connected to the detergent inlet 162b. Accordingly, the pumps of the regulator 161 and detergent container 163 may operate for a predetermined period of time to flow a preset amount of purified water and detergent into the mixing chamber 162.

Meanwhile, the branch flow connection hole 162c may be connected to the branch flow path 164. The branch flow path 164 may supply the purified water and detergent mixed washing water to each of the pair of washing water nozzles 165.

The branch flow path 164 may be formed by a single pipe branching into two, wherein one end of the branch can be connected to one of the pair of washing water nozzles 165, and the other end of the branch can be connected to the other of the pair of washing water nozzles 165.

The washing water nozzles 165 may be arranged in pairs spaced apart from each other. In this case, the pair of washing water nozzles 165 may be arranged symmetrically to each other.

Furthermore, the washing water nozzle 165 is connected to the branch flow path 164 to allow washing water to flow into the interior and discharge the washing water to the washing plate 122. The wash water nozzle 165 can discharge the washing water to the upper surface of the washing plate 122 through the wash water discharge hole 165a. The washing water discharge hole 165a may be opened in a direction facing the upper surface of the mop 242 mounted on the washing plate 122. More specifically, the washing water discharge hole 165a formed in the washing water nozzle 165 may discharge the washing water toward the washing protrusion 122a of the washing plate 122.

The washing water nozzle 165 may be provided on a nozzle installation wall 123d connected to the coupling wall 123. The wash water nozzle 165 may be positioned higher than the uppermost part of the washing plate 122 so that the washing plate 122 may be detachable. Accordingly, when the washing plate 122 is detached or the drawer 190 is withdrawn, the washing plate 122 and the washing tank 128 do nozzle 165, and a washing water discharge space may be provided between the nozzle installation wall 123d and the washing plate 122.

In addition, the wash water nozzle 165 may be positioned at a position spaced vertically upward from a position spaced apart from the center in the width direction of the washing protrusion 122a. Specifically, when the rotation direction of the mop 242 during the mop 242 washing process is assumed to be one direction, the wash water nozzle 165 may be positioned at a position spaced apart from the center in the width direction of the washing protrusion 122a in the other direction. The washing water discharge hole 161c may be arranged between the protrusion 122aa and the washing rib 122ab, but may be arranged spaced apart from the protrusion 122aa in the opposite direction to the rotational direction of the mop 242. With this configuration, the washing water can flow along the center of the width direction of the washing protrusion 122a.

The detergent container 163 includes a detergent container body 163a, a handle 163b, and a detergent container rail 163c.

The detergent container body 163a may provide a space for storing liquid, including detergent. For example, the detergent container body 163a may be formed in a box shape with an open top.

The handle 163b may be provided at the front of the detergent container body 163a. The handle (163b) can be formed recessed toward the rear from the front surface of the detergent container body (163a).

With this configuration, when a user grasps the grip and pulls forward, the detergent container body 163a may be pulled forward and withdrawn. Therefore, according to the present invention, a user can easily pull the detergent container 163 forward, and then supply detergent.

The detergent container rail 163c may be formed on the left and right sides of the detergent container body 163a. The detergent container rail 163c may guide the movement of the detergent container body 163a.

For example, the detergent container rail 163c may be formed in the form of a groove or rib along the front-back direction on the left and right sides of the detergent container body 163a.

With this configuration, when a user couples the detergent container 163 to the housing 110, it can be attached in the correct position, and wash water may be prevented from leaking out.

Meanwhile, although not shown, a rail may be formed in the housing 110 corresponding to the detergent container rail 163c. The above rail may be formed corresponding to the shape and position of the detergent container rail 163c.

Meanwhile, an injection hole 163aa may be formed in the detergent container body 163a. Liquid containing detergent may be injected into the detergent container body 163a through the injection hole 163aa.

The detergent container 163 may include a refill cap 163d. The refill cap 163d may open and close the injection hole 163aa.

The injection hole 163aa may be positioned at the upper front of the detergent container body 163a. The injection hole 163aa may be positioned adjacent to the handle 163b. With this configuration, the user can detach the refill cap 163d from the detergent container body 163a with only a portion of the detergent container body pulled out from the detergent container insertion hole 132b, and then refill the detergent through the injection hole 163aa.

The refill cap 163d is detachably connected to the detergent container body 163a and may include a sealing portion 163db that protrudes from one side and is inserted into the injection hole 163aa. The sealing portion 163db may support the inlet port (163aa) so that it is inserted into the injection hole 163aa and sealed.

In addition, the refill cap 163d may include a cap handle 163da formed by protruding a portion of the rim outward. The cap handle 163da may be positioned to protrude outward from the detergent container body 163a.

In addition, the refill cap 163d may be separated from the detergent container body 163a and may be placed in a state of being suspended from the detergent container body 163a even when the injection hole 163aa is opened. That is, in order to prevent the loss of the refill cap 163d, the refill cap 163d may be provided with a tether 163dc. The tether 163dc has one end integrally formed with the refill cap 163d and the other end has a fastening hole 163dd and is inserted into the detergent container body 163a.

The detergent container 163 is provided with a tether insertion portion 163ab, and the tether insertion portion 163ab is formed smaller than the fastening hole 163dd and larger than the cross-section of the tether 163dc. That is, when the tether insertion portion 163ab has a circular hole shape, the diameter may be formed smaller than the diameter of the fastening hole 163dd, and when the cross-section of the tether 163dc is circular, the diameter may be formed larger than the cross-section diameter of the tether 163dc.

In addition, the detergent container body 163a may be provided with a cap mounting portion 163ac and a handle mounting portion 163ad so that the refill cap 163d may be assembled in the correct position. The cap mounting portion 163ac may be provided such that the periphery of the injection hole 163aa is formed with a step from the upper surface of the detergent container body 163a, and may be formed such that the refill cap 163d is inserted therein. The handle mounting portion 163ad may be formed such that one side of the cap mounting portion 163ac is extended, and may be formed such that the cap handle 163da is inserted therein. At this time, the handle mounting portion 163ad is provided to correspond to the position and shape of the cap handle 163da so that the refill cap 163d is positioned in the correct position. With this configuration, when the refill cap 163d is attached to the detergent container body 163a, the cap handle 163da is positioned to protrude outward from the detergent container body 163a, allowing the user to easily detach or attach the refill cap 163d.

### Drainage Structure Using Two Air Pumps:

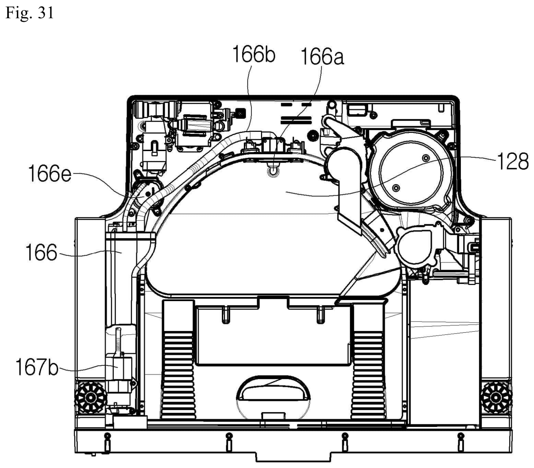

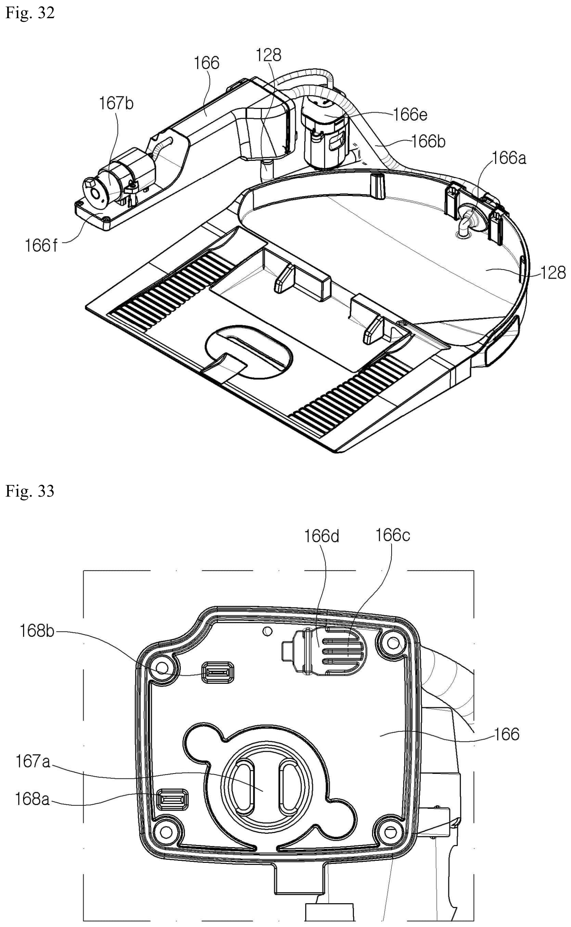

FIG. 31 is a plan view illustrating a wastewater tank of a robot cleaner station according to an embodiment of the present disclosure. FIG. 32 is a diagram illustrating a wastewater tank and a wash tank of a robot cleaner station according to an embodiment of the present disclosure. FIG. 33 is a front view illustrating the rear side of a wastewater tank of a robot cleaner according to an embodiment of the present disclosure.

Referring to FIGS. 31 to 33, the wastewater tank 166 of the robot cleaner station 100 of the present invention will be described as follows.

The wastewater tank 166 may provide a space for storing water used to wash a mop 242. After washing the mop 242, the wash water discharged from the upper surface of the washing plate 122 may descend along the slope of the washing plate 122 and be drained through the passage hole 122b. Washing water passing through the passage hole 122b accumulates in the washing tank 128.

Hereinafter, the shape of the wastewater tank 166 will be described in detail. The wastewater tank 166 is accommodated within the housing 110 and may be positioned on the right side of the washing tank 128. The body of the wastewater tank 166 may have a rectangular parallelepiped shape extending in the front-back direction of the housing 110. A wastewater inlet 166c, a wastewater outlet 167a, and a water level detection sensor 168 may be positioned on the inner side of the rear surface of the wastewater tank 166. In addition, a wastewater inlet pipe and a wastewater outlet pipe may be connected to the rear surface of the wastewater tank 166.

In addition, the wastewater tank 166 may be formed to have a wider width at the rear than at the front. This can provide space for arranging various components on the rear side of the wastewater tank 166. Furthermore, the width of the wastewater tank 166 may be formed to correspond to the shape of the washing tank 128 positioned on the side. For example, the washing tank 128 may have a semicircular structure that narrows toward the rear. Accordingly, the waste tank (166) can have a width that widens toward the rear.

Meanwhile, the wastewater tank 166 may include a protrusion 166f extending forward from the body of the wastewater tank 166. The protrusion 166f communicates with the interior of the wastewater tank 166 to store additional wastewater. A wastewater discharge pump 167b may be positioned on the upper portion of the protrusion 166f. Through this configuration, the limited space within the housing 110 can be utilized more efficiently.

A wastewater suction nozzle 166a may be formed protrudingly on the washing tank wall 128b. The opening of the wastewater suction nozzle 166a may be arranged to face the bottom of the washing tank 128. Washing water accumulated in the washing tank 128 may flow into the wastewater suction path 166b through the wastewater suction nozzle 166a, and may flow into the wastewater tank 166 through the wastewater suction path 166b. That is, the liquid that has passed through the washing plate 122 may flow along the washing tank 128 and be discharged through the wastewater suction nozzle 166a.

The liquid that has flowed in through the wastewater suction nozzle 166a may move to the wastewater tank 166 through the wastewater suction path 166b. That is, water in the washing tank 128 may move to the wastewater tank 166 through the wastewater suction path 166b. The wastewater suction path 166b is formed in the wastewater suction pipe, a wastewater suction nozzle 166a is formed at one end of the wastewater suction pipe, and a wastewater inlet 166c formed in the wastewater tank 166 can be formed at the other end of the wastewater suction pipe. The wastewater suction pipe may be connected to the rear surface of the wastewater tank 166. At this time, the wastewater suction pipe may be arranged to pass through the lower side of the outside air supply module 171. That is, the wastewater suction path 166b may be arranged at the lower side of the external air supply module 171. In addition, the wastewater suction path 166b can be arranged at the lower side of the external air supply channel 171a.

Water passing through the wastewater suction path 166b can flow into the wastewater tank 166 through the wastewater inlet 166c. The wastewater inlet 166c may be formed on the rear side of the wastewater tank 166. In addition, the wastewater inlet 166c may be positioned above the wastewater outlet 167a described below. The diameter of the wastewater inlet 166c may be formed to be smaller than that of the wastewater outlet 167a.

Meanwhile, wastewater may flow in simultaneously with the start of washing the mop 242 of the robot cleaner 200. The washed water may first be stored in the washing tank 128 and then flow into the wastewater tank 166. On the other hand, since the discharge of wastewater begins after the water level of the wastewater tank 166 reaches a certain level, it needs to be discharged at a faster rate than the wastewater inflow rate. To this end, the diameter of the wastewater inlet 166c is made small, and the wastewater outlet 167a is formed with a larger diameter, so that the hourly inflow and discharge rates of wastewater can be maintained constant.

In addition, in the robot cleaner station 100 of the present invention, the height of the wastewater inlet 166c may be arranged higher than the height of the wastewater suction nozzle 166a with respect to the ground. The liquid in the wastewater tank 166 may flow back into the washing tank 128 due to gravity. The present invention can prevent backflow into the washing tank 128 through a check valve 166d or a water level detection sensor 168.

Meanwhile, a check valve 166d for opening and closing a wastewater inlet 166c may be arranged. The check valve 166d may be opened when water flows into the wastewater tank 166 and closed when no water flows from the wastewater tank 166. For example, the check valve 166d may be opened when the wastewater suction pump 166e is in operation. In another example, the check valve 166d may be closed when the water level in the wastewater tank 166 reaches the height of the second sensor 168b.

Washing water accumulated in the washing tank 128 may be supplied to the wastewater tank 166 by the wastewater suction pump 166e. The wastewater suction pump 166e may be connected to the wastewater tank 166 through a nozzle. The wastewater suction pump 166e may generate negative pressure in the wastewater tank 166. When negative pressure is generated in the wastewater tank 166, liquid accumulated in the washing tank 128 may flow into the wastewater tank 166. At this time, the check valve 166d of the wastewater inlet 166c may be open.

The wastewater suction pump 166e may be positioned in the same direction as the wastewater inlet 166c formed in the wastewater tank 166. For example, the wastewater inlet 166c may be formed on the rear side of the wastewater tank 166, and the wastewater suction pump 166e may be positioned at the rear of the wastewater tank 166.

Meanwhile, the wastewater suction pipe may be connected to the rear side of the wastewater tank 166. When the wastewater suction pump 166e creates negative pressure in the wastewater tank 166, liquid flowing into the wastewater inlet 166c may be discharged forward from the rear side of the wastewater tank 166.

For example, the wastewater suction pump 166e may be positioned at the rear of the wastewater tank 166. That is, it may be positioned in the opposite direction to the discharge direction of the liquid flowing into the wastewater inlet 166c. This configuration prevents the liquid from flowing back into the wastewater suction pump 166e and allows the liquid to flow smoothly into the wastewater tank 166.

Hereinafter, a configuration for discharging wastewater from the wastewater tank 166 to the drain pipe 25 of the kitchen cabinet 2 will be described.

Water in the wastewater tank 166 may be discharged to the drain pipe 25 of the kitchen cabinet 2 through the wastewater discharge path 167. One end of the wastewater discharge path 167 may be connected to the wastewater tank 166, and the other end may be connected to the drain pipe 25. The wastewater discharge path 167 is formed in the wastewater discharge pipe, a wastewater outlet 167a is formed at one end of the wastewater discharge pipe, and the other end of the wastewater discharge pipe can be connected to the drain pipe 25. At this time, the washing water stored in the wastewater tank 166 may be discharged to the drain pipe 25 by flowing through the wastewater discharge path 167 by the wastewater discharge pump 167b.

Water stored in the wastewater tank 166 may be discharged to the outside through the wastewater outlet 167a. The wastewater outlet 167a may be formed on the rear surface of the wastewater tank 166. Furthermore, the wastewater outlet 167a may be positioned lower than the wastewater inlet 166c. The diameter of the wastewater outlet 167a may be formed to be larger than the wastewater inlet 166c. The wastewater outlet 167a may be connected to a wastewater discharge path 167. Liquid within the wastewater tank 166 may flow into the wastewater discharge path 167 through the wastewater outlet 167a. Liquid passing through the wastewater discharge path 167 may be drained into a drain pipe 25.

Water within the wastewater tank 166 may be discharged into a drain pipe 25 of the kitchen cabinet 2 through a wastewater discharge pump 167b.

The wastewater discharge pump 167b may be an air pump. The wastewater discharge pump 167b may be connected to the wastewater tank 166 through a nozzle. The wastewater discharge pump 167b may apply air pressure to the wastewater tank 166. The wastewater discharge pump 167b may create positive pressure in the wastewater tank 166, thereby causing the liquid within the wastewater tank 166 to be discharged to the outside.

If the wastewater discharge pump 167b is an air pump, the liquid within the wastewater tank 166 does not directly pass through the pump, so there is no concern about foreign matter becoming trapped.

Furthermore, the air pump has the effect of reducing constraints on the location of the wastewater tank 166. Specifically, centrifugal pumps are affected by gravity and location, and their performance may deteriorate when the wastewater tank 166 is located far away or at a high location. On the other hand, the air pump controls the pressure to support fluid movement, so it can smoothly move wastewater even when the wastewater tank 166 is located far from the air pump or at a certain height, allowing for free adjustment of the location of the wastewater tank 166.

Furthermore, by using two pumps, a wastewater suction pump 166e and a wastewater discharge pump 167b, the liquid inflow and discharge into the wastewater tank 166 can be independently handled. This reduces the risk of leakage and pressure loss in the wastewater tank 166. Furthermore, it prevents wear and tear on each pump, extending its lifespan.

The wastewater discharge pump 167b may be arranged in the opposite direction to the side where the wastewater outlet 167a is formed in the wastewater tank 166. For example, the wastewater outlet 167a may be formed on the rear side of the wastewater tank 166, and the wastewater discharge pump 167b may be arranged at the front of the wastewater tank 166. Specifically, the wastewater discharge pump 167b may be arranged on the upper surface of a protrusion 166f formed at the front of the wastewater tank body.

Meanwhile, since the wastewater discharge pump 167b is arranged at the front of the wastewater tank 166, the wastewater discharge pump 167b can push the liquid inside the wastewater tank 166 from the front to the rear. At this time, if the wastewater outlet 167a is positioned opposite the wastewater discharge pump 167b, the liquid within the wastewater tank 166 can be smoothly discharged to the outside.

In addition, the wastewater discharge pump 167b may operate according to the water level detected by the water level detection sensor 168.

The wastewater tank 166 of the robot cleaner station 100 according to one embodiment of the present invention may include a water level detection sensor 168 therein.

The water level detection sensor 168 may measure the water level of the wastewater tank. The water level detection sensor 168 may be positioned on the inner rear side of the wastewater tank 166.

The water level detection sensor 168 may be formed in multiple numbers. The water level detection sensor 168 may include a first sensor 168a and a second sensor 168b positioned higher from the ground than the first sensor 168a. That is, the first sensor 168a and the second sensor may be positioned at different heights.

Meanwhile, a wastewater inlet 166c through which liquid flows in, a wastewater outlet 167a through which liquid flows out, the first sensor 168a, and the second sensor 168b may be arranged on the rear side of the wastewater tank 166.

The first sensor 168a may be positioned higher than the lowest point of the wastewater outlet 167a relative to the ground. Furthermore, the second sensor 168b may be positioned at a position equal to or lower than the lowest point of the wastewater inlet 166c relative to the ground.

Since the second sensor 168b may be positioned at a position equal to or lower than the lowest point of the wastewater inlet 166c relative to the ground, liquid can be prevented from flowing back into the wastewater inlet 166c. Additionally, since the check valve 166d can close the wastewater inlet 166c, it can prevent liquid from flowing back into the wastewater inlet 166c.

Furthermore, since the first sensor 168a can be located higher than the lowest point of the wastewater outlet 167a relative to the ground, the wastewater discharge pump 167b can reduce idle time, thereby achieving energy-efficient use even when the discharge efficiency is low.

Hereinafter, the operation of the wastewater suction pump 166e and the wastewater discharge pump 167b according to the water level detected by the water level detection sensor 168 will be described.

First, when the mop is washed, water may accumulate in the washing tank 128. At this time, the wastewater suction pump 166e operates to create negative pressure within the wastewater tank 166. The liquid accumulated in the washing tank 128 may flow into the wastewater tank 166.

At this time, the water level in the wastewater tank 166 increases, and the water level detection sensor 168 may detect the water level in the wastewater tank. When the water level in the wastewater tank 166 reaches the first sensor 168a, wastewater may be discharged.

For example, when the water level of the wastewater tank 166 reaches the height of the first sensor 168a, the wastewater discharge pump 167b may be operated.

As another example, when the water level of the wastewater tank 166 reaches the height of the second sensor 168b, the operation of the wastewater suction pump 166e may be stopped.

As another example, when the water level of the wastewater tank 166 is located above the height of the first sensor 168a and below the height of the second sensor 168b, the wastewater discharge pump 167b may be operated until the water level of the wastewater tank 166 is detected to have dropped below the first sensor 168a.

This configuration can prevent the wastewater inside the wastewater tank 166 from flowing back into the wastewater suction pump 166e or the wastewater inlet 166c.

The wastewater discharge pump 167b can form a positive pressure in the wastewater tank 166 to discharge the liquid to the outside. At this time, the water level inside the wastewater tank 166 can decrease. At this time, the wastewater inlet 166c can be closed by a check valve 166d.

In addition, the mop washing unit 160 can include a separate check valve (not shown). The check valve can prevent the fluid inside the drain pipe 25 from flowing back into the wastewater discharge path 167. The check valve can be provided at the other end of the wastewater discharge path 167 connected to the drain pipe 25.

### Mop drying unit:

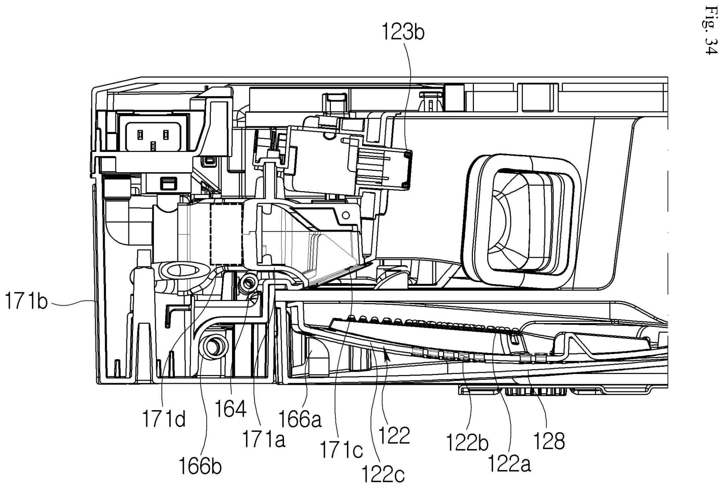

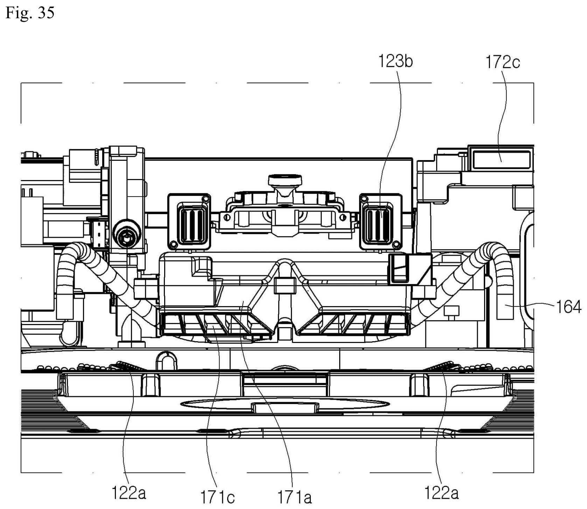

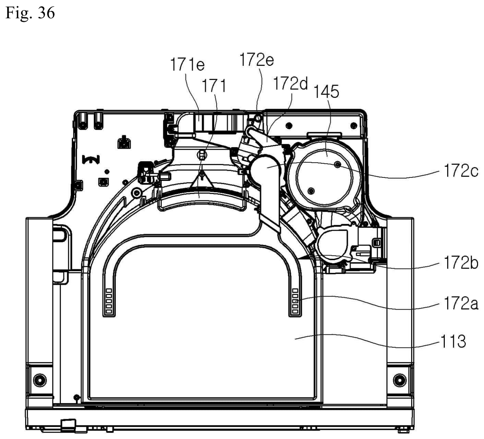

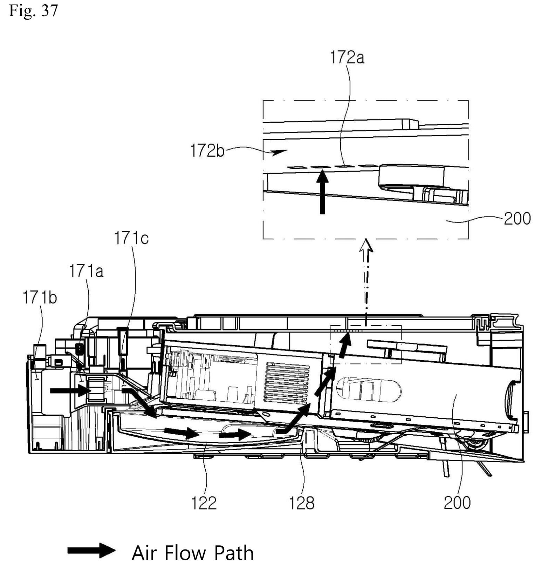

Referring to FIGS. 34 to 38, the robot cleaner station 100 according to one embodiment of the present disclosure may include a mop drying unit 170. At this time, the mop drying unit 170 may dry the mop 242 of the robot cleaner 200 that has been washed by the mop washing unit 160 or the mop 242 that is wet after a water cleaning task is completed.

The mop drying unit 170 according to one embodiment of the present disclosure may include an external air supply module 171, and an air discharge unit 172.

The external air supply module 171 may supply heat to the accommodating space (S) and can include an outside air supply path 171a, an external air inlet 171b, an external air discharge hole 171c, a heater 171d, and a blower fan (not shown).

The external air supply module 171 is formed with the external air supply path 171a. The external air supply path 171a may cause outside air to flow to the outside air outlet 171c.

The external air supply path 171a may connect the outside space of the housing 110 and the accommodating space. One side of the external air supply path 171a may be connected to an outside space through the external air inlet 171b, and the other side of the external air supply path 171a may be connected to the accommodating space (S) through the external air outlet 171c.

The external air inlet 171b may be formed on the rear surface of the housing 110. A plurality of external air inlets 171b may be formed on the rear surface of the housing 110. Air from outside the housing 110 may be introduced into the external air supply path 171a through the external air inlets 171b. Therefore, air from outside the housing 110 may be introduced into the interior of the housing 110.

At least a portion of the external air outlet 171c may be disposed above the washing plate 122. The external air outlet 171c may be opened in a direction facing the washing plate 122. The pair of external air outlets 171c may be provided, each open downward.

The external air outlet 171c may discharge air that has passed through the external air supply path 171a. The external air outlet 171c may discharge air heated by the heater 171d. For example, the external air outlet may be formed in the external air outlet 171c.

Meanwhile, in the present embodiment, the left-right diameter of the external air discharge unit 171c may become narrower as it moves forward. That is, in the present embodiment, the left-right diameter of the external air discharge unit 171c may have a width at the rear end greater than a width at the front end. Through this, even if the disc-shaped mop 242 rotates during the drying process, there is an effect of being able to evenly dry the entire mop 242.

Meanwhile, the external air discharge unit 171c may be equipped with a grille that guides the direction of air discharge. Through this, it is possible to prevent heated air from being concentrated and discharged to a specific location.

With the mop 242 mounted to the washing plate 122, the external air outlet 171c may be opened toward the upper side of the mop 242. Accordingly, the external air outlet 171c is positioned adjacent to the mop 242 and opens downward, allowing air discharged from the external air outlet 171c to flow toward the mop 242.

In particular, the external air discharge unit 171c of the present embodiment may be provided in a form that slopes downward as it goes toward the front of the robot cleaner station 100. Accordingly, the end from which air is discharged from the external air discharge unit 171c may be formed to be inclined at a predetermined angle with respect to the ground. At this time, the angle may be 90 degrees or less. Accordingly, the external air discharge unit 171c may discharge air along a direction intersecting the direction in which the flow guide surface 122c is formed.

The blower fan (not shown) is positioned on the external air supply path 171a and may blow air toward the accommodating space (S). When the blower fan (not shown) is driven, air drawn in through the external air inlet 171b may be heated by the heater 171d and discharged into the accommodating space through the external air outlet 171c.

The heater 171d is positioned on the external air supply path 171a and may heat the air flowing through the external air supply path 171a. The heater 171d may heat the air discharged through the external air outlet 171c.

The heater 171d may include a heater housing and a heating element. The heater housing may be positioned on the external air supply path 171a and may have a space provided therein to accommodate the heating element. Furthermore, the heating element may heat the air flowing into the heater housing. Therefore, air heated by the heating element is discharged through the external air outlet 171c to the accommodating space (S), thereby drying the wet mop 242.

Air heated by heat discharged from the outside air supply module 171 may be discharged through the air discharge unit 172.

At least a portion of the air discharge unit 172 may be disposed above the receiving space (S).

Air heated by heat discharged from the outside air supply module 171 may supply heat to the mop 242 of the robot cleaner 200. Accordingly, moisture remaining after being absorbed by the mop 242 may be vaporized by absorbing heat from the air. This vaporized moisture may flow within the receiving space (S). Accordingly, the air within the receiving space (S) may contain vaporized moisture, and the humidity within the receiving space (S) may increase (hereinafter, air containing vaporized moisture within the receiving space (S) may be referred to as "wet steam").

Specifically, at least a portion of the air discharge unit 172 may be disposed on the upper cover 113, and the upper cover 113 may cover the upper portion of the accommodating space (S).

The air heated by the heat discharged from the outside air supply module 171 vaporizes the moisture in the mop 242, resulting in increased humidity. Therefore, when the robot cleaner station 100 is disposed at the bottom of the kitchen cabinet 2, if the moisture vapor comes into contact with various parts of the kitchen cabinet 2, such as the mop holder 26, it may have a negative effect on the parts.

At this time, in the present embodiment, the upper cover 113 covers the upper portion of the accommodating space (S), and the door 126 covers the front of the accommodating space (S). Therefore, the upper cover 113 and the door 126 prevent the moisture vapor in the accommodating space (S) from escaping to the outside, thereby preventing the kitchen cabinet 2 from coming into contact with the moisture vapor.

The air discharge unit 172 may include an air suction hole 172a, an air discharge duct 172b, and an exhaust fan 172c.

The air suction hole 172a may be in communication with the accommodating space (S). The air suction hole 172a may be arranged on the upper portion of the accommodating space (S). The moisture vapor in the accommodating space (S) may be discharged through the air suction hole 172a.

The air suction hole 172a may be positioned higher from the ground than the robot cleaner 200 when the robot cleaner 200 is mounted on the mounting unit 120. This may increase the efficiency of suctioning steam that rises as the mop dries.

For example, the air suction hole 172a may be formed in the upper cover 113. In this case, the upper cover 113 may be formed in a form in which two or more plates are overlapped, and the air suction hole 172a may be formed in the lowest plate among them, and a flow path communicating with the air suction hole 172a may be formed between the plates to form an air discharge duct 172b.

As another example, the air suction hole 172a may be formed on the air exhaust duct 172b in the shape of a circular or square pipe, and the air exhaust duct 172b may be connected to the upper cover 113.

With this configuration, when the upper cover 113 is removed, the air exhaust duct 172b may be removed together with the upper cover 113. If the upper portion of the robot cleaner station 100 needs to be opened for repairs or other reasons, the operator can easily remove the air exhaust duct 172b by simply lifting the upper cover 113.

The air suction hole 172a may be formed in the form of a hole on the air exhaust duct 172b. For example, the air suction hole 172a may be formed in the form of a plurality of slits arranged in parallel in the air exhaust duct 172b. Alternatively, the air suction hole 172a may be formed in the shape of a long hole in the air exhaust duct 172b.

Meanwhile, a plurality of air suction holes 172a may be arranged at the same distance from the front end of the housing 110. For example, a pair of air suction holes 172a may be arranged at the same distance from the front end of the housing 110. That is, the air suction holes 172a may include a first suction hole and a second suction hole. In this case, the first suction hole may be arranged at the upper left front side of the accommodating space (S), and the second suction hole may be arranged spaced apart from the first suction hole and at the upper right front side of the accommodating space (S).

The distance from the external air outlet 171c to the air suction hole 172a may be greater than the distance from the external air outlet 171c to the mop 242. This is to prevent the heated air discharged from the external air outlet 171c from being sufficiently supplied to the mop 242 and being sucked directly into the air suction hole 172a, thereby wasting energy.

In addition, the air suction hole 172a may be arranged closer to the door 131 than the external air outlet 171c. Since the air suction hole 172a is arranged at the upper front portion of the accommodating space (S), the range of space in which the hot air discharged from the external air outlet 171c flows is expanded, thereby improving the drying efficiency of the mop 242. Accordingly, the hot air discharged through the external air outlet 171c can flow forward and dry the mop 242 of the robot cleaner 200, and then be discharged through the air suction hole 172a.

In addition, the air suction hole 172a may be positioned above the path along which the robot cleaner 200 moves within the housing 110. This can prevent condensation from forming on the walls within the housing 110.

For example, at least a portion of the air suction hole 172a may be positioned vertically above a position where the left-right width of the robot cleaner 200 is greatest when the robot cleaner 200 is mounted on the mounting unit 120. That is, at least a portion of the air suction hole 172a may be positioned above a position where the gap between the robot cleaner 200 and a pair of inner walls 124 is the narrowest. At this time, at least a portion of the air suction hole 172a may be positioned forward of the washing plate 122.

Through this, the steam generated during the drying process of the mop 242 can be prevented from flowing forward of the robot cleaner station 100, and the moisture can be prevented from penetrating the sensor located at the front of the robot cleaner 200 and causing malfunction.

The air exhaust duct 172b can connect the air suction hole 172a and the exhaust fan 172c to the drain pipe 25 of the kitchen cabinet 2. The air exhaust duct 172b can guide the moisture vapor discharged through the air suction hole 172a to the drain pipe 25.

The air exhaust duct 172b can be connected to the exhaust fan 172c on one side, and can be branched into multiple sides on the other side. Through this, even if a single exhaust fan 172c is used, moisture vapor can be sucked in from multiple locations, thereby achieving the effect of stably discharging moisture vapor.

The air exhaust duct 172b may have an air exhaust path formed therein that communicates with the air suction hole 172a.

The air exhaust path may refer to a path through which air drawn in through the air suction hole 172a flows. For example, the air exhaust path may be formed by including the internal space of the air exhaust duct 172b, the internal space of the housing of the exhaust fan 172c, and the internal space of the check valve 172d. One side of the air exhaust path may be connected to the air suction hole 172a, and the other side may be connected to the air discharge hole 172e.

The exhaust fan 172c can generate air flow from the air suction hole 172a to the exhaust pipe 25. The exhaust fan 172c can generate air flow so that moisture vapor in the accommodating space (S) can be sucked into the air suction hole 172a and then discharged to the outside through the air exhaust duct 172b.

The exhaust fan 172c can include an exhaust fan housing, a fan motor, and an impeller. The exhaust fan housing can have a flow path formed therein so as to communicate with the air exhaust duct 172b. When the exhaust fan motor is operated and the exhaust fan impeller rotates, air in the accommodating space (S) or the housing 110 can be drawn into the air exhaust duct 172b, pass through the exhaust fan housing, and be discharged through the air discharge hole 172e.

Meanwhile, in the present embodiment, the exhaust fan 172c may be coupled with the outside air supply module 171. Specifically, the exhaust fan housing of the exhaust fan 172c may be coupled with the outside air supply module 171 to form a single assembly. This minimizes the space occupied by the external air supply module 171 and the air discharge unit 172.

The exhaust fan 172c may be positioned on the left and right sides of the external air supply module 171. Specifically, the exhaust fan 172c may be positioned between the dust collection motor 145 and the external air supply module 171. This allows components to be positioned in a limited space, and secures space for a path for discharging steam.

When the exhaust fan 172c is driven, air from the accommodating space (S) may be introduced into the air suction hole 172a. Air drawn into the air suction hole 172a may be exhausted through the drain pipe 25.

The mop drying unit 170 may include a check valve 172d that prevents fluid within the drain pipe 25 from flowing back into the air exhaust duct 172b. The check valve 172d may be positioned at the rear of the exhaust fan 172c. The check valve 172d may be in communication with the internal space of the exhaust fan 172c. That is, based on the air flow direction, the check valve 172d may be positioned downstream of the exhaust fan 172c. The air discharge hole 172e may be formed at the rear end of the check valve 172d. The check valve may prevent fluid within the drain pipe 25 from flowing back into the air discharge unit 172.

At this time, the lower end of the air discharge hole 172e may be arranged along a direction perpendicular to the ground. Specifically, the air discharge hole 172e may be formed in an air discharge pipe arranged along a direction perpendicular to the ground, and the air discharge pipe may be connected to a check valve. With this configuration, the fluid discharged from the air discharge hole 172e is prevented from flowing backward by utilizing the upward convection property of high-temperature, humid air.

The air discharge unit 172 may be connected downstream from the drain pipe 25 based on the U-trap 25a of the drain pipe 25. Specifically, the air discharge hole 172e may be connected to the drain pipe 25 via a flow path member. For example, the flow path member may be a hose. This is because, when the air discharge unit 172 is connected upstream 25b from the drain pipe 25 based on the U-trap 25a, the heat exhausted through the air discharge unit 172 may not pass through the drain pipe 25 due to accumulated water in the U-trap 25a. Furthermore, this prevents any foul odors generated by the air discharged from the air discharge unit 172 from flowing back along the drain pipe 25 and spreading into the kitchen.

The wet steam discharged through the air suction hole 172a and passing through the exhaust fan 172c can be discharged to the exterior of the housing 110 along the flow path member via the air discharge hole 172e.

In this case, the flow path member may be connected to the drain pipe 25 by penetrating either side of the outer wall. With this configuration, the connection direction of the flow path member can be selected according to the installation environment of the robot cleaner station 100 of the present invention, so there is an advantage of easy installation and management.

### Drawer:

If the charging stand for the robot cleaner is placed under a kitchen cabinet, it may provide an interior effect by minimizing exposure to the outside, but there is a limitation that if the robot cleaner breaks down while it is placed under the kitchen cabinet or if the charging stand for the robot cleaner breaks down, it may be difficult for the user to take it out and repair it. To solve this problem, in the present invention, a drawer 190 may be added to the robot cleaner station 100.

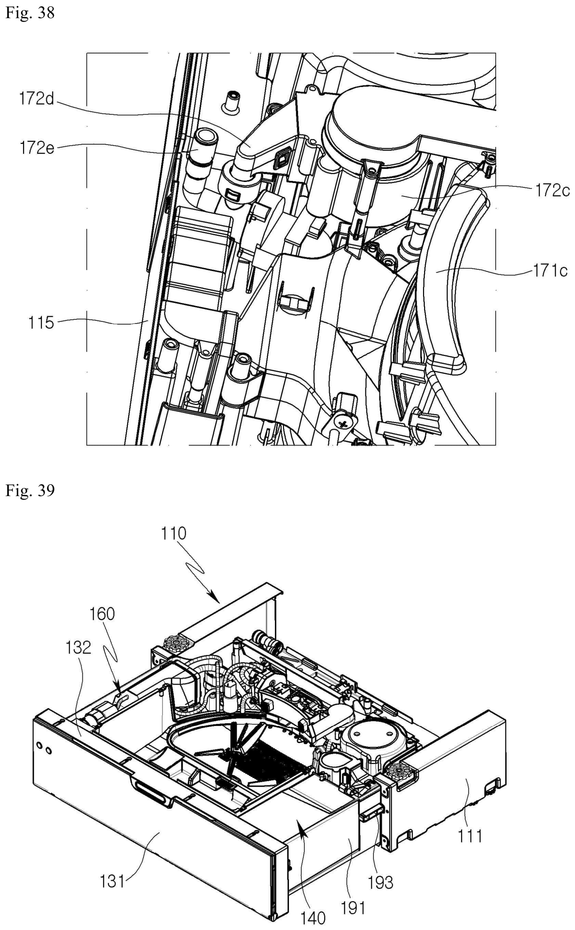

In this regard, FIG. 39 is a drawing illustrating a state in which a drawer is withdrawn from a robot cleaner station according to an embodiment of the present disclosure.

Referring to FIG. 39, the drawer 190 of the robot cleaner station 100 according to one embodiment of the present disclosure will be described as follows.

The robot cleaner station 100 according to one embodiment of the present disclosure may further include the drawer 190 that is drawn out from the housing 110.

The drawer 190 may be moved relative to the housing 110. For example, the housing 110 may be fixedly connected to the kitchen cabinet 2, and the drawer 190 may be pulled out forward from the housing 110.

At this time, the drawer 190 may be pulled out while having a mounting unit 120 provided therein. With this configuration, when the drawer 190 is pulled out, the mounting unit 120 and/or the robot cleaner 200 may be pulled out from the kitchen cabinet 2.

At this time, when the drawer 190 is pulled out from the housing 110 while the door 126 closes the entrance 127, the robot cleaner 200 placed in the mounting unit 120 may be exposed to the outside.

Therefore, according to the present embodiment, when maintenance such as repair or cleaning of the robot cleaner station 100 is required, the user can easily pull out the mounting unit 120 and/or the robot cleaner 200 through the drawer 190 to expose the internal components of the robot cleaner station 100 or the robot cleaner 200.

Meanwhile, the drawer 190 according to one embodiment of the present disclosure may be withdrawn with the dust collection unit 140 provided therein. At this time, the direction in which the dust collection unit 140 can be parallel to the direction in which the dust bag drawer 144 is withdrawn.

In addition, the drawer 190 may be withdrawn together with the mop washing unit 160. Specifically, the drawer 190 can be pulled out together with the detergent container 163. At this time, the direction in which the drawer 190 is pulled out can be parallel to the direction in which the detergent container 163 is pulled out.

With this configuration, the robot cleaner station 100 according to one embodiment of the present disclosure may be provided with the drawer 190, the dust bag drawer 144, and the detergent container 163 all having parallel withdrawal directions.

Therefore, the user can easily recognize the withdrawal directions of the components of the robot cleaner station 100 of the present disclosure, and may easily withdraw them for repair and maintenance.

The drawer 190 includes a drawer side wall 191, a fitting portion 192, and a drawer rail 193.

The drawer side wall 191 is provided to be relatively movable with respect to the outer wall surface of the housing 110. For example, a pair of drawer side walls 191 may be arranged to face the outer wall surfaces of the pair of housings 110.

In this case, the pair of drawer side walls 191 may be arranged closer to the inner side of the robot cleaner station 100 than the outer wall surfaces of the pair of housings 110. That is, the pair of drawer side walls 191 may be arranged closer to the mounting unit 120 than the outer wall surfaces of the pair of housings 110.

Meanwhile, the dust collection unit 140 and/or the mop washing unit 160 may be arranged between the drawer side walls 191 and the mounting unit 120.

With this configuration, the dust collection unit 140 and the mop washing unit 160 may be positioned using minimal horizontal space.

The drawer rail 193 is arranged on the drawer side wall 191 and may guide the movement of the drawer side wall 191. The drawer rail 193 is fixedly connected to the drawer side wall 191 or is formed integrally with the drawer side wall 191, and may be connected to a rail installed on the outer wall 111 of the housing 110 to guide the movement path of the drawer side wall 191. Meanwhile, although the present invention describes that the drawer 190 and the housing 110 are provided with rails, it is not necessarily limited to the form of a rail, and may include all forms such as rollers, guide grooves, or guide ribs that may replace the rails.

### Control configuration:

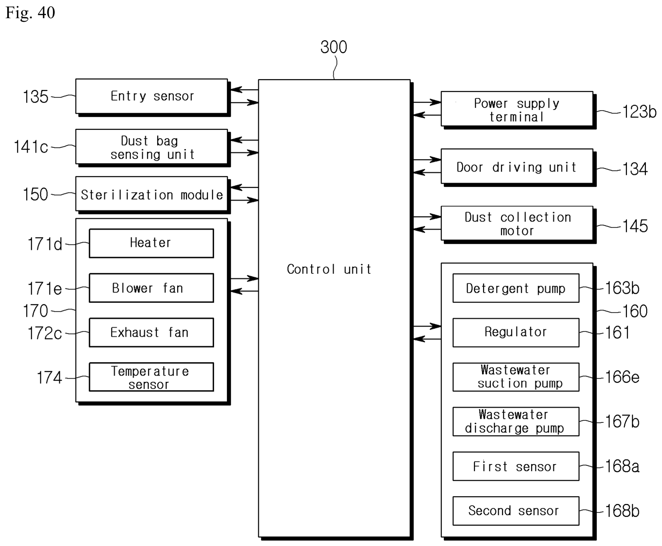

FIG. 40 is a block view showing a control configuration in a robot cleaner station according to an embodiment of the present disclosure.

Referring to FIG. 40, the control configuration of the robot cleaner station 100 of the present disclosure will be described as follows.

The cleaner station 100 according to an embodiment of the present disclosure further includes a control unit 300 that controls the mounting unit 120, the dust collection motor 145, the mop washing unit 160, and the mop drying unit 170.

The control unit 300 may be composed of a printed circuit board and components mounted on the printed circuit board.

The control unit 300 can receive a signal from the entry sensor 135 and control the door driving unit 134.

The control unit 300 can detect the approach of the robot cleaner 200 and control the door driving unit 134 to rotate the door 131. Specifically, the control unit 300 can detect whether the robot cleaner 200 has entered through the entry sensor 135. If the distance between the robot cleaner 200 and the door 131 is closer than a preset distance, the door 131 can be rotated to open the entrance 127. In addition, the control unit 300 can rotate the door 131 to close the entrance 127 when the robot cleaner 200 is coupled to the mounting unit 120.

When power is supplied to the battery of the robot cleaner 200 from the power supply terminal 123b, the control unit 300 can determine that the robot cleaner 200 is connected to the mounting unit 120.

The control unit 300 can drive the dust collection motor 145 to suck up dust inside the dust bin 220 of the robot cleaner 200.

Meanwhile, the robot cleaner station 100 according to an embodiment of the present disclosure may include a memory (not shown). The memory may contain various data for driving and operating the robot cleaner station 100.

Meanwhile, the robot cleaner station 100 according to an embodiment of the present disclosure may include a communication unit (not shown). The communication unit may support wireless communication with other devices outside the robot cleaner station 100, including the robot cleaner 200 or a terminal (not shown). A short-range communication module or a long-range communication module may be provided as a wireless communication module to support wireless communication.

Short-range communication may be, for example, Bluetooth communication or NFC (Near Field Communication).

Long-distance communication includes, for example, Wireless LAN (WLAN), Digital Living Network Alliance (DLNA), Wireless Broadband (Wibro), World Interoperability for Microwave Access (Wimax), Global System for Mobile communication (GSM), Code Division Multi Access (CDMA), Code Division Multi Access 2000 (CDMA2000), Enhanced Voice-Data Optimized or Enhanced Voice-Data Only (EV-DO), Wideband CDMA (WCDMA), High Speed Downlink Packet Access (HSUPA), High Speed Uplink Packet Access (HSUPA), IEEE 802.16, Long Term Evolution (LTE), Long Term Evolution-Advanced (LTEA), Wireless Mobile Broadband Service (WMBS), Bluetooth Low Energy (BLE), Zigbee, and Radio Frequency (RF). It could be LoRa (Long Range), etc.

The control unit 300 may control the mop washing unit 160.

Specifically, the control unit 300 may control the detergent pump 161d. The control unit 300 can operate the detergent pump 161d to discharge detergent stored in the detergent container 163 to the mop 242.

Furthermore, the control unit 300 may control the regulator 162. The control unit 300 may operate the regulator 162 to adjust the amount of purified water discharged to the mop 242.

Furthermore, the control unit 300 may control the wastewater drain pump 167b. The control unit 300 may operate the wastewater drain pump 167b to drain wastewater after washing the mop 242.

The control unit 300 may control the wastewater suction pump 166e. The control unit 300 can operate the wastewater suction pump 166e to supply wastewater after washing the mop 242 to the wastewater tank.

In addition, the control unit 300 can receive signals from the first sensor 168a and the second sensor 168b to receive water level information of the wastewater tank 166.

The control unit 300 can control the mop drying unit 170.

Specifically, the control unit 300 may control the heater 171d. The control unit 300 may operate the heater 171d to heat the air discharged to the mop 242.

Furthermore, the control unit 300 may control the blower fan 171e. The control unit 300 may operate the blower fan 171e to discharge air to the mop 242.

Furthermore, the control unit 300 may control the exhaust fan 172c. The control unit 300 may operate the exhaust fan 172c to discharge air after drying the mop 242 to the outside.

In addition, the control unit 300 may receive a signal from the temperature sensor 174. The control unit 300 may measure the temperature of the air within the housing 110 through the temperature information received from the temperature sensor 174. In addition, the control unit 300 may control the operation of the heater 171d based on the temperature information received from the temperature sensor 174 to sterilize bacteria present in the mop 242.

In addition, the control unit 300 can receive a signal from the dust bag detection unit 141c. When the dust bag detection unit 141c detects that the dust bag 143 is attached, it transmits a signal to the control unit 300, and the control unit 300 can control the dust collection unit 140 based on this. For example, the control unit 300 can operate the dust collection motor 145 only when the dust bag 143 is attached. In addition, the control unit 300 can operate the sterilization module 150 only when the dust bag 143 is attached.

Although the present invention has been described with reference to the exemplified drawings, it is to be understood that the present invention is not limited to the embodiments and drawings disclosed in this specification, and those skilled in the art will appreciate that various modifications are possible without departing from the scope and spirit of the present invention.

Further, although the operating effects according to the configuration of the present invention are not explicitly described while describing an embodiment of the present invention, it should be appreciated that predictable effects are also to be recognized by the configuration.

### [Description of Numeral References]

| | | | |
|---|---|---|---|
| 1: | Cleaner system | 2: | Kitchen cabinet |
| 100: | Robot cleaner station | 110: | Housing |
| 120: | Mounting unit | 122: | Washing plate |
| 128: | Washing tank | 130: | Door unit |
| 131: | Door | 140: | Dust collection unit |
| 141: | Dust collection unit housing | 144: | Dust bag drawer |
| 145: | Dust collection motor | 150: | Sterilization unit |
| 160: | Mop washing unit | 166a: | Wastewater suction nozzle |
| 166b: | Wastewater suction path | 166c: | Wastewater inlet |
| 166d: | Check valve | 166e: | Wastewater suction pump |
| 166f: | Protrusion | 167: | Wastewater discharge path |
| 167a: | Wastewater outlet | 167b: | Wastewater outlet pump |
| 168: | Water level detection sensor | 170: | Mop drying unit |
| 171: | External air supply module | 172: | Air discharge unit |
| 190: | Drawer | 200: | Robot cleaner |
| 300: | Control unit | | |

## Claims

1. A robot cleaner station (100) comprising:
a housing (110);
a washing tank (128) disposed within the housing (110) and configured to collect water used to wash a mop of a robot cleaner (200);
a wastewater tank (166) configured to store water used to wash the mop;
a wastewater suction path (166b) configured to move water within the washing tank (128) to the wastewater tank (166);
a wastewater discharge path (167) configured to discharge water within the wastewater tank (166) to a drain pipe (25) of a kitchen cabinet (2); and
a wastewater discharge pump (167b) configured to discharge water within the wastewater tank (166),
**characterized in that** the wastewater discharge pump (167b) applies air pressure to the wastewater tank (166).

2. The robot cleaner station (100) of claim 1, further comprising:
a wastewater suction pump (166e) configured to create negative pressure in the wastewater tank (166).

3. The robot cleaner station (100) of claim 2, wherein the wastewater tank (166) comprises:
a wastewater inlet (166c) through which the water of the washing tank (128) flows in; and
a check valve (166d) configured to open and close the wastewater inlet (166c), and
the check valve (166d) is configured to open only when the wastewater suction pump (166e) is in operation.

4. The robot cleaner station (100) of claim 3, wherein the wastewater tank (166) comprises a wastewater outlet (167a) in communication with the wastewater discharge path (167), and
the wastewater outlet (167a) is located lower than the wastewater inlet (166c).

5. The robot cleaner station (100) of claim 4, wherein the wastewater inlet (166c) and the wastewater outlet (167a) are arranged on the rear side of the wastewater tank (166), and
the wastewater tank (166) has a wider width in the left-right direction at the rear than at the front.

6. The robot cleaner station (100) of claim 3, wherein the wastewater suction pump (166e) is disposed in the same direction as the direction where the wastewater inlet (166c) is formed in the wastewater tank (166).

7. The robot cleaner station (100) of claim 4, wherein the wastewater discharge pump (167b) is disposed in the opposite direction from the direction where the wastewater outlet (167a) is formed in the wastewater tank (166).

8. The robot cleaner station (100) of claim 4, further comprising:
a water level detection sensor (168) configured to measure the water level of the wastewater tank (166).

9. The robot cleaner station (100) of claim 8, wherein the wastewater discharge pump (167b) operates based on the water level detected by the water level detection sensor (168).

10. The robot cleaner station (100) of claim 8, wherein the water level detection sensor (168) comprises:
a first sensor (168a); and
a second sensor (168b) located higher than the first sensor (168a) relative to the ground.

11. The robot cleaner station (100) of claim 10, wherein the first sensor (168a) is disposed higher than the lowest point of the wastewater outlet (167a) based on the ground.

12. The robot cleaner station (100) of claim 10, wherein the second sensor (168b) is disposed equal to or lower than the lowest point of the wastewater inlet (166c) with respect to the ground.
